# EUROPEAN PATENT SPECIFICATION

(11) **EP 0 960 719 B1**
(45) Date of publication and mention of the grant of the patent: **01.09.2004**
(21) Application number: 97928530.1
(22) Date of filing: 27.06.1997
(51) Int. Cl.: B29C 67/20, B29C 33/14, B29C 33/42, B29C 44/34, B29C 44/58, B29C 44/14

(54) **METHOD OF MANUFACTURING SKIN-CARRYING INTERNAL-MOLD EXPANSION MOLDED BODY OF SYNTHETIC RESIN, AND METAL MOLD USED FOR THE SAME METHOD**
VERFAHREN ZUM HERSTELLEN EINES BESCHICHTETEN, IN EINEM FORMWERKZEUG EXPANDIERTEN, GEGENSTANDES AUS SYNTHETISCHEM HARZ, UND BEI DIESEM VERFAHREN VERWENDETES METALLFORMWERKZEUG
PROCEDE DE FABRICATION D'UN CORPS EN RESINE SYNTHETIQUE A PEAU MOULE PAR EXPANSION DANS UN MOULE, ET MOULE EN METAL UTILISE DANS CE PROCEDE

(30) Priority: 28.06.1996 JP 17029896; 11.07.1996 JP 18235596; 21.05.1997 JP 13090897
(43) Date of publication of application: 01.12.1999
(73) Proprietor: Kaneka Corporation, Osaka-shi, Osaka 530-0005 (JP)
(72) Inventor: MATSUKI, Kiyoshi, Nishinomiya-shi, Hyogo 663-8204 (JP); KAKIMOTO, Yoriki, Settsu-shi, Osaka 566-0072 (JP)
(74) Representative: DIEHL GLAESER HILTL & PARTNER
(86) International application number: PCT/JP1997/002272
(87) International publication number: WO 1998/000287

(56) References cited:
- EP-A- 0 139 972
- EP-A- 0 363 596
- EP-A- 0 477 476
- DE-A- 4 313 043
- JP-A- 4 212 851
- JP-A- 5 261 819
- JP-A- 55 073 532
- JP-A- 56 072 936
- JP-A- 61 239 934
- DATABASE WPI Section Ch, Week 198641 Derwent Publications Ltd., London, GB; Class A32, AN 1986-267814 XP002159065 & JP 61 193834 A (TAKAOKA KOGYO KK), 28 August 1986 (1986-08-28)
- PATENT ABSTRACTS OF JAPAN vol. 011, no. 048 (M-561), 13 February 1987 (1987-02-13) & JP 61 211019 A (MEIWA SANGYO KK), 19 September 1986 (1986-09-19)

## Description

### TECHNICAL FIELD

This invention relates to a method for producing a cellular molded article of synthetic resin with a surface skin which is used, for example, as an automobile interior trim material or the like and a mold pattern used for producing the above-mentioned article.

### BACKGROUND OF THE INVENTION

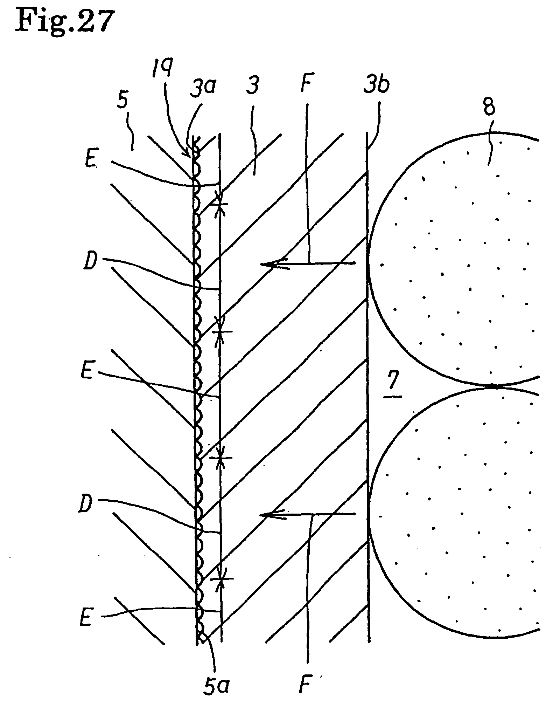

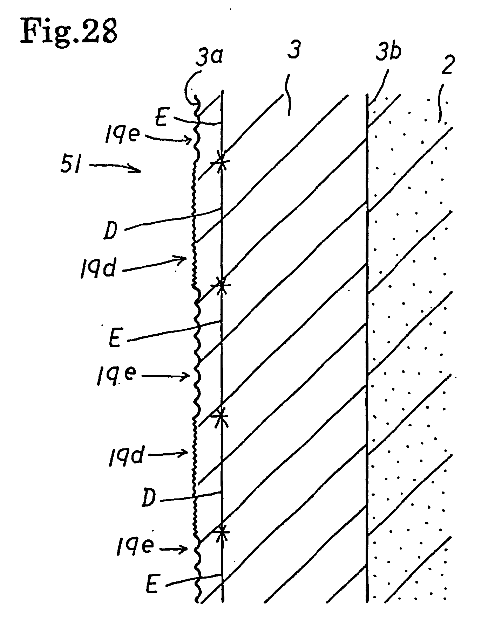

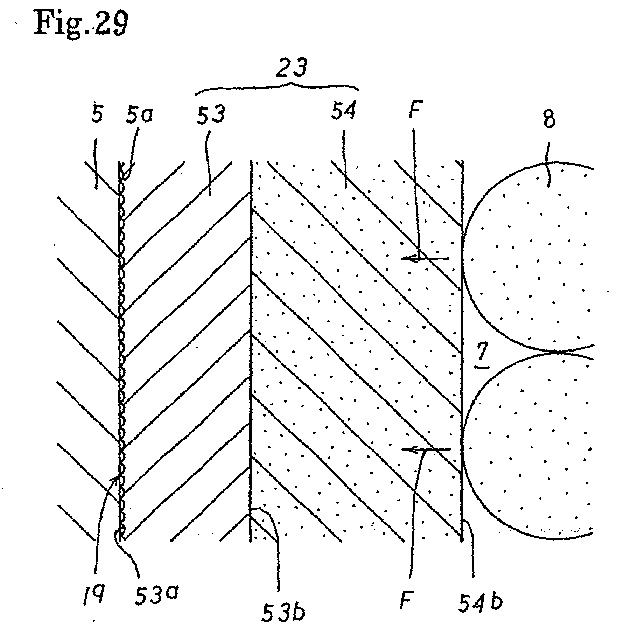

(a) As for the conventional method for producing cellular molded articles of synthetic resin with surface skin of this kind, for example, a so-called simultaneous molding in once is known, in which a thermoplastic resin skin material is set in any one of two mold parts, and after clamping the mold parts, expanded beads are charged in the molding chamber, and then expanded additionally for melt bonding together by steam heating, along with making melted bonding with the said thermoplastic resin skin material. In this method when the said two mold parts can be opened and clamped toward vertical direction, the said one mold part has to be the lower part to make setting of the said thermoplastic resin skin material easy.
(b) Moreover, in this simultaneous united molding, as shown in Fig. 27, it is common that the surface 5a of the said one mold part 5 is smoothed, and that the surface 3a of the said thermoplastic resin skin material 3 is made by a mat processing with a prescribed roughness and performed to form a fine and uniform unevenness 19. In this case, after charging expanded beads 8 in the said molding chamber 7 and cellular molding these beads 8 by steam heating, the prescribed range D of the surface 3a of the said thermoplastic resin skin material 3 is pressed by the surface 5a of the said one mold 5 harder than the other range E by expanding force F of the said expanded beads 8 from the backside 3b.
   Here, since the said thermoplastic resin skin material 3 is softened by steam heating, as shown in Fig. 28, the fine unevenness 19d which is even finer than the fine unevenness 19e formed in advance by mat processing is formed in the said range D which is pressed harder as mentioned above. Also, the said other range E is pressed against the surface 5a of the said one mold part 5 by the expanding force which is smaller than the pressingof the range D. Therefore, the fine unevenness 19e which is about as fine as or a little finer than the fine unevenness 19 formed in advance by the said mat processing is formed in the other range E. However, the fine unevenness 19d in the said range D is finer as a result of being pressed harder against the surface 5a of the said one mold part 5, and the range D appears as circular so-called beads pattern. This is disadvantageous as it deteriorates the appearance of the obtained cellular molded article of synthetic resin having the surface skin 51.
(c) As the example of conventional method to solve such problem, there is a method in which, as shown in Fig. 29, a laminated sheet 23 consisting of a thermoplastic resin sheet 53 having a surface 53a being formed with the fine unevenness 19 by mat processing and the thermoplastic resin extruded foam sheet 54 which is attached to the backside 53b of the thermoplastic resin sheet 53, is used as the said thermoplastic resin skin material 3. The sheet 23 is set as the said thermoplastic resin sheet 53 surface will come in contact with the said one mold part 5 and the said thermoplastic resin extruded foam sheet 54 surface will come in contact with the said expanded beads 8. Other processes being the same as the above-mentioned one, are also known.
   In this method, when the said thermoplastic resin extruded foam sheet 54 is pressed from its backside 54b by expanding force F of the said expanded beads 8 at the cellular molding process of the said expanded beads 8, this thermoplastic resin extruded foam sheet 54 functions as a so-called cushioning material. Therefore, it is hard for the pressing force F to work on the surface 53a of the said thermoplastic resin 53. Consequently, the above-mentioned beads pattern does not appear.
(d) In addition to the above-mentioned simultaneous united molding, it is known, for example, the so-called afterward attached molding, in which a cellular molded article of synthetic resin 2 and a thermoplastic resin skin material 3 are set between two mold parts, and when clamping the mold parts and pressurizing them, the cellular molded article of synthetic resin 2 and the thermoplastic resin skin material 3 are united by heat and/or adhesives.

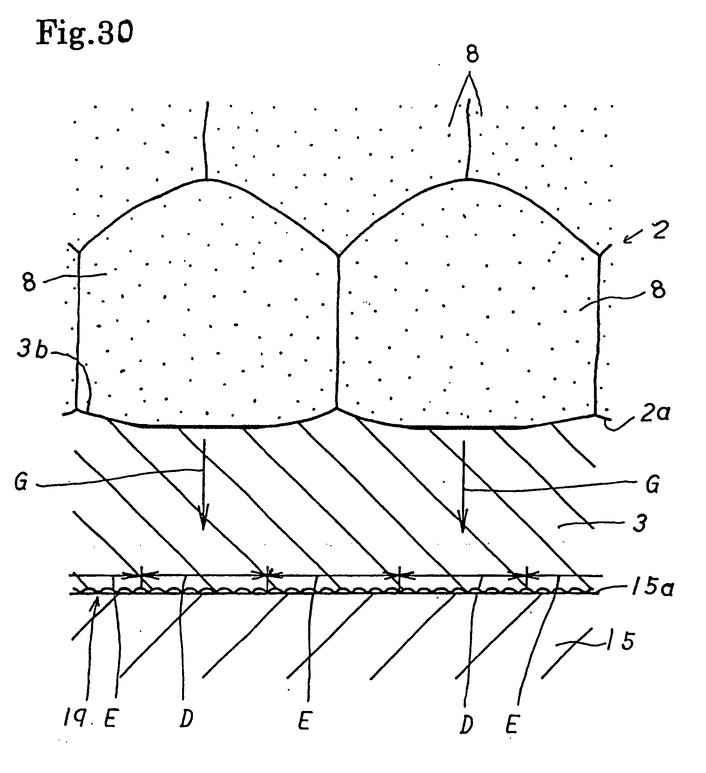

In Fig. 30, the case when the said cellular molded article of synthetic resin 2 and the thermoplastic resin skin material 3 are melt bonded and united by heat is shown. In this case, as in the above-mentioned one, it is common that the surface 15a of the one mold part 15, which will come in contact with the said thermoplastic resin skin material 3, is smoothed and that mat processing of a prescribed unevenness is more or less uniformly performed to form the fine unevenness 19 on the surface 3a of the said thermoplastic resin skin material 3. On the other hand, it is not common that the surface 2a of the said cellular molded article of synthetic resin 2 is smoothed. Also the case of uniting the cellular molded article of synthetic resin 2 with the thermoplastic resin skin material 3 by an adhesive existing between them without heat, or the case of uniting by both heat and adhesive is similar as above-mentioned.

However, in the conventional example of above-mentioned item (a), since the expanded beads are expanded by the said steam heating, moisture may remain in the said molding chamber during this steam heating process and before the expanding process of the said expanded beads. Therefore, the disadvantage is that this remaining moisture causes a poor melt bonding of the expanded beads in the cellular molded article of synthetic resin obtained by the cellular molding process of the said expanded beads.

In the conventional example of above-mentioned item (c), the disadvantage is that, since the said thermoplastic resin extruded foam sheet 54 has to be separately produced by a foamed extrusion process, and stuck to the said thermoplastic resin sheet 53 beforehand, the production process is complicated and the production efficiency is poor.

Also, in the conventional example of above-mentioned item (d), since the surface 2a of the said cellular molding article of synthetic resin 2 is not smooth, as shown in Fig. 30, the prescribed range D of the surface 3a of the said thermoplastic skin material 3 is pressed from the backside 3b against the surface 15a of the said one mold part 15 harder than the other range E by the pressurizing force G when melt bonding and uniting this cellular molded article of synthetic resin 2 with thermoplastic resin skin material 3.

Therefore, as it is the case with the simultaneous united molding of above-mentioned item (b), the said range D appears as circular so-called beads pattern, and it is disadvantageous as it deteriorates the appearance of the obtained cellular molded article of synthetic resin having a surface skin 51. Also, when the cellular molded article of synthetic resin 2 and the thermoplastic resin skin material 3 are united by both heat and adhesive, a similar beads pattern is observed. Moreover, when they are united by an adhesive without heat, a similar beads pattern is observed, and it is disadvantageous as above-mentioned.

From laid-open JP-56-72936A, there was known a method for manufactuing a composite article in one process, wherein a surface material is held between a female die and an upper die, a space formed between the surface material and the upper die is filled with a foamed resin material, e.g. with roaming polystyrene beads, and the space is subjected to vacuum and heated for foaming said formed resin material.

The present invention has been accomplished in consideration of the above-mentioned disadvantages, and aims at the providing of a method for producing a cellular molded article of synthetic resin having a surface skin, wherein the cellular molded article of synthetic resin is obtained by cellular molding of expanded beads in which a poor melt bonding does not occur, and wherein a thermoplastic resin skin material is united with this cellular molded article which has an excellent appearance without a beads pattern on its surface and which has a good production efficiency. The invention also aims at a mold used for producing said cellular molded article.

### DISCLOSURE OF THE INVENTION

The present invention according to claim 1 resides in a method for producing a cellular molded article of a synthetic resin having a surface skin, which comprises using a mold of two parts defining together a molding chamber, inserting a 'skin material into one part of the mold, clamping the parts of the mold together, charging expanded beads into said molding chamber and then further expanding and melt bonding together said expanded beads by heating with steam, along with melt bonding and uniting said expanded beads with the skin material, characterized in that there is used a skin material which consists of a thermoplastic resin, and that during said heating step there is printed a fine unevenness with an amplitude of 5 to 150 µm and a wavelength of the surface roughness waveshape of 30 to 600 µm, as measured by a surface roughness measuring instrument, onto a prescribed range of the surface of the thermoplastic resin skin material, in which prescribed range the thermoplastic resin skin material is pressed harder to the surface of said one part of the mold by the pressurizing force of the expanding beads than in the remaining range of said surface, and onto the remaining range of said surface, the surface roughness in both said ranges being nearly uniform, wherein said printing of the fine uneveness onto said ranges is effected by a fine uneveness formed in advance on the surface of said one part of the mold.

Accordingly, in a so-called simultaneous united molding, by printing the fine roughness of the said one mold part with the expanding force of the expanded beads, the roughness of the fine unevenness formed on the surface of the said thermoplastic resin skin materials can be surely made to be approximately the same. Therefore, the appearance of the article can be improved more efficiently, and the advantage of this invention is that a cellular molded article of a synthetic resin having a surface skin and an excellent appearance without leaving the previous beads pattern can be produced.

The preferred embodiment according to claim 2 resides in a method as defined in claim 1, wherein there is used said one part of the mold with an unevenness printing material attached to the surface thereof in advance.

Therefore, even when the unevenness printing material is attached, by printing the fine unevenness of this unevenness printing material witch the expanding force of the expanded beads, the fine unevenness to be formed on the surface of the said thermoplastic resin skin material can be surely kept approximately constant. Accordingly, the cellular molded article of synthetic resin with a surface skin with a more excellent appearance without beads pattern can be produced, and the present facility can be used as it is. Also there is the advantage that, when this unevenness printing material is removable from the said one mold part, it can be utilized in various facilities.

The preferred embodiment according to claim 3 resides in a method as defined in claim 1 or 2, wherein the cellular molded article and the thermoplastic resin skin material are united by the additional use of an adhesive.

The preferred embodiment according to claim 4 resides in a method as defined in any of claims 1 to 3, wherein there is used said one mold part having on its surface an unevenness printing material which, in addition to the fine unevenness, is provided with an unevenness of a product design pattern, and wherein when printing said fine unevenness onto the surface of the thermoplastic resin skin material the unevenness of the product design pattern is also printed thereon.

Therefore, a cellular molded article of a synthetic resin having a surface skin together with an unevenness for a product design pattern, which has more excellent appearance without a beads pattern, can be produced. Accordingly, the advantage is that a high-grade feeling can be added to the cellular molded article of a synthetic resin having a surface skin.

The preferred embodiment according to claim 5 resides in a method as defined in any of claims 1 to 4, wherein there is used said one mold having a fine unevenness with an amplitude of not more than 50 µm and a wavelength of the surface roughness waveshape of not more than 200 µm.

Therefore, by printing the fine unevenness of the said one mold part with the expanding force of the expanded beads, the roughness of fine unevenness formed on the surface of the said thermoplastic resin skin material can be surely kept approximately at a constant level. Accordingly, a cellular molded article of a synthetic resin having a surface skin and a more excellent appearance without leaving beads patterns can be produced. Moreover, since the beads pattern does not appear when the original surface roughness of the said thermoplastic resin skin material is very rough or very fine, the advantage is that various kinds of thermoplastic resin skin materials can be used.

The present invention according to claim 6 resides in a mold for producing a cellular molded article of a synthetic resin having a surface skin by a method as defined in any of claims 1 to 5, comprising two parts (5, 6) defining together a molding chamber, characterized in that the surface (5a) of one of said parts (5) of the mold is provided with a fine unevenness (9, 9d, 9e) having an amplitude of 5 to 150 µm and a wavelength of the surface roughness waveshape of 30 to 600 µm, as measured by a surface roughness measuring instrument.

Therefore, when using this mold in so-called afterward attached molding the advantage is that a cellular molded article of a synthetic resin having a surface skin and a more excellent appearance without remaining beads pattern can be produced.

According to a further preferred embodiment of the invention, an unevenness for the product design pattern is formed in addition to the said fine unevenness. Therefore, when using this mold in so-called simultaneous united molding or afterward attached molding the advantage is that the obtained cellular molded article of a synthetic resin having surface skin has a more excellent appearance without leaving a beads pattern, and a high-grade feeling can be given additionally to the cellular molded article of a synthetic resin having a surface skin by the said unevenness for a product design pattern.

### BRIEF DESCRIPTION OF THE DRAWINGS

Fig. 1 is a side cross-sectional drawing of a cellular molded article of a synthetic resin having a surface skin.
Fig. 2 is a side cross-sectional explanatory drawing showing the clamped state of the mold parts with the forming and setting thermoplastic resin skin material on one of the parts in a method for producing a cellular molded article of a synthetic resin having a surface skin according to the embodiment 1.
Fig. 3 is a side cross-sectional explanatory drawing showing the way of charging expanded beads into the molding chamber.
Fig. 4 is a side cross-sectional explanatory drawing showing the way of supplying steam into the molding chamber after charging expanded beads.
Fig. 5 is a side cross-sectional explanatory drawing showing the way of vacuum pumping from the molding chamber.
Fig. 6 is a side cross-sectional explanatory drawing showing the cellular molded state of expanded beads after supplying steam in the molded chamber.
Fig. 7 is a side cross-sectional drawing of a cellular molded article of a synthetic resin having a surface skin with an edge part of the skin material separated from the molding chamber.
Fig. 8 is a side cross-sectional explanatory drawing of the clamped state with a setting thermoplastic resin skin material on the surface of one mold part in a method for producing a cellular molded article of a synthetic resin having a surface skin of the embodiment 2.
Fig. 9 is a side cross-sectional enlarged drawing to show how the thermoplastic resin skin material of Fig. 8 is set.
Fig. 10 is a side cross-sectional enlarged drawing to show how the expanded beads are cellular molded.
Fig. 11 is a side cross-sectional enlarged drawing to show the vicinity of the surface of the obtained cellular molded article of the synthetic resin having surface skin according to this invention.
Fig. 12 is a side cross-sectional enlarged drawing to show how the expanded beads are cellular molded in a method for producing a cellular molded article of a synthetic resin having a surface skin according to the embodiment 3.
Fig. 13 is a side cross-sectional enlarged drawing to show the vicinity of the surface of the obtained cellular molded article of a synthetic resin having a surface skin.
Fig. 14 is a side cross-sectional enlarged drawing to show how the expanded beads are cellular molded in a method for producing a cellular molded article of a synthetic resin having a surface skin according to the embodiment 4.
Fig. 15 is a side cross-sectional enlarged drawing to show how the expanded beads are cellular molded in a method for producing a cellular molded article of a synthetic resin having a surface skin according to the embodiment 5.
Fig. 16 is a side cross-sectional enlarged drawing to show how the expanded beads are cellular molded in a method for producing a cellular molded article of a synthetic resin having a surface skin according to the embodiment 6.
Fig. 17 is the same side cross-sectional enlarged drawing as Fig. 16 except that the surface of the unevenness for the product design pattern is approximately smoothed.
Fig. 18 is a side cross-sectional drawing showing the way of clamping with a setting cellular molded article of a synthetic resin and a thermoplastic resin skin material between two mold parts in a method for producing a cellular molded article of a synthetic resin having a surface skin according to the embodiment 7.
Fig. 19 is a side cross-sectional enlarged drawing to show the state after clamping.
Fig. 20 is a side cross-sectional drawing showing the way of clamping with a setting thermoplastic resin skin material on the cellular molded article of a synthetic resin between two mold parts with one of the parts being the upper part, and the other being the lower part.
Fig. 21 is a side cross-sectional enlarged drawing to show the state after clamping.
Fig. 22 is a side cross-sectional enlarged drawing to show the way of melt bonding and uniting the cellular molded article of a synthetic resin with a thermoplastic resin skin material by heat when pressurizing them under the condition of Fig. 19.
Fig. 23 is a side cross-sectional drawing of the obtained cellular molded article of a synthetic resin having a surface skin.
Fig. 24 is a side cross-sectional enlarged drawing to show the vicinity of the surface of the cellular molded article of a synthetic resin having a surface skin according to Fig. 23.
Fig. 25 is a side cross-sectional enlarged drawing to show how the cellular molded article of a synthetic resin is melt bonded and united with a thermoplastic resin skin material by both heat and adhesive in a method for producing a cellular molded synthetic resin having a surface skin according to the embodiment 8.
Fig. 26 is a side cross-sectional enlarged drawing to show the vicinity of the surface of the obtained cellular molded article of a synthetic resin having a surface skin.
fig. 27 is a side cross-sectional enlarged drawing to show how the expanded beads are cellular molded in the conventional method (b).
Fig. 28 is a side cross-sectional enlarged drawing to show how the beads pattern is formed on the surface of the obtained cellular molded article of a synthetic resin having a surface skin.
Fig. 29 is a side cross-sectional enlarged drawing to show how the expanded beads are cellular molded in the conventional method (c).
Fig. 30 is a side cross-sectional enlarged drawing to show how the cellular molded article of a synthetic resin is melt bonded and united with a thermoplastic resit skin material by heat when clamping the mold parts and pressurizing them in the conventional method (d) .

Embodiments of this invention are described below, based on the drawings. In embodiments 1 to 6 the cases of applying the so-called simultaneous united molding are explained, and in embodiments 7 to 8 the cases of applying the so-called afterward attached molding are explained.

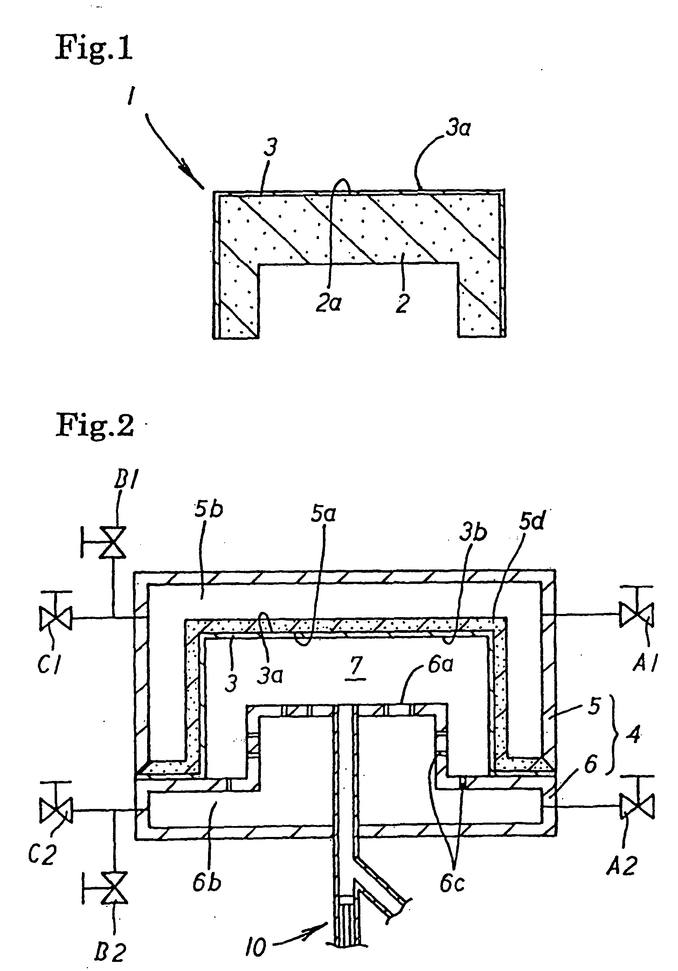

As shown in Fig. 1, a producing method of embodiment 1 is used for producing a cellular molded article of a synthetic resin having a surface skin 1, which comprises a cellular molded article of a synthetic resin 2 and a thermoplastic resin skin material 3 melt bonded and united with the surface 2a of the cellular molded article of a synthetic resin 2.

In this production method, as shown in Fig.2 to 7, i.e. in a method for producing a cellular molded article of a synthetic resin having a surface skin 1, a thermoplastic resin skin material 3 formed in this molding chamber 7 is set on one mold part 5 of two mold parts 5 and 6 which define a molding chamber 7. After clamping the mold parts expanded beads 8 are charged in this molding chamber 7, and expanded, melt bonded together by steam heating along with being melt bonded and united with the said thermoplastic resin skin material 3. The said one mold part 5 is the upper part, and the other part 6 is the lower part during the said steam heating and before expanding the said expanded beads 8.

First, as shown in Fig. 2, the thermoplastic resin skin material 3 formed in this molding chamber 7 is set on the said one mold part 5, and the mold parts are clamped.

Here, the said mold 4 comprises two mold parts 5, 6 which can be opened and clamped with a vertical motion, and the said one part 5 is the upper part, the other part 6 is the lower part.

The said one mold part 5, for example, has a concave shape in its side cross section and forms a chamber 5b inside. A steam valve A1, a decompression valve B1 and a drain valve C1 are connected to the said chamber 5b, respectively.

The said the other mold part 6, for example, has a convex shape in ist side cross section, forms a chamber 6b inside and has a plurality of vapor holes 6c on the surface 6a side connecting with the said chamber 6b. A steam valve A2, a decompression valve B2 and a drain valve C2 are connected with the said chamber 6b, respectively. A feeder 10 is set up to charge expanded beads 8 into the said molding chamber 7.

As examples of the said thermoplastic resin skin material 3, thermoplastic resin sheets including sheets of a vinyl chloride resin or a polyolefine resin such as a polyethylene resin and a polypropylene resin can be mentioned among others. Since this thermoplastic resin skin material 3 is used as a surface skin of the cellular molded article of synthetic resin haying a surface skin 1, this thermoplastic resin skin material 3 may be colored with a desired color by a coloring toner and the like according to its use.

Since this thermoplastic resin skin material 3 is set on the surface 5a of the said one mold part 5 after having been formed in the said molding chamber 7, it is advantageous that a process to form this thermoplastic resin skin material 3 in advance in another molding chamber or the like can be skipped. As forming methods for this, for example, vacuum forming or slash forming can be mentioned among others.

When it is necessary for the obtained cellular molded article of synthetic resin having surface skin 1 to have a mounting or the like, for example, for connecting with another member, an insert material of a prescribed shape (not shown in the Figures) may be set in advance on the surface 6a of said other mold part 6 and the said insert material may be united with the cellular molded article of a synthetic resin 2 produced by expanding and melt bonding the said expanded beads together when the cellular molding of these expanded beads 8 is conducted.

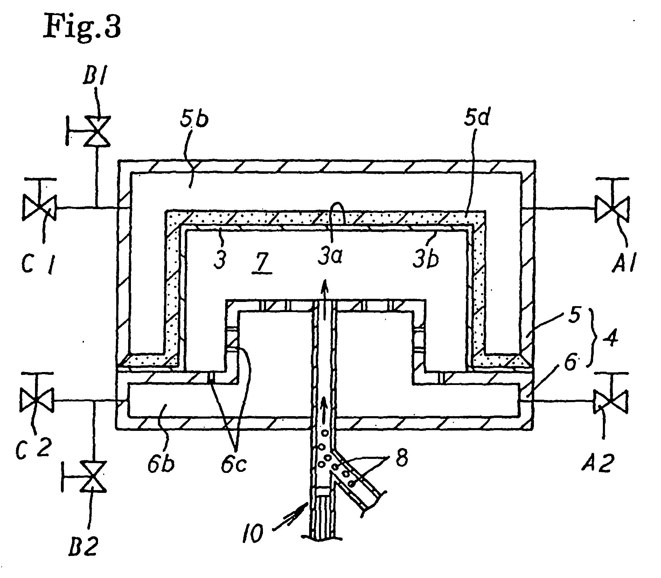

Next, as shown in Fig. 3, expanded beads 8 are charged into the molding chamber 7 from the said feeder 10. In this case, in order to charge the expanded beads 8 more easily, the charging can be performed with keeping the mold parts a little open. However, the width of the opening is not so wide that the expanded beads drop out.

As examples of the synthetic resin of the said beads 8, a polyolefine resin and a polystyrene resin can be mentioned among others.

As examples of the said polyolefine resin, polyethylene resin or polypropylene resin such as low density polyethylene, middle density polyethylene, high density polyethylene, linear low density polyethylene, ethylene-vinyl acetate copolymer, propylene homopolymer, ethylene-propylene random copolymer, ethylene-propylene block copolymer, ethylene-propylene-butene random terpolymer, propylene-vinyl chloride copolymer, propylene-butene copolymer, propylene-maleic anhydride copolymer and poly(butene-1) can be mentioned among others, and these can be used alone or as a mixture of at least two.

This polyolefine resin is preferably not cross-linked, however, may be cross-linked by using peroxide, radiation or the like.

Furthermore, a mixture of this polyolefine resin with another thermoplastic resin can be used. As examples of this thermoplastic resin, when mixing with the said polypropylene resin, low density polyethylene, linear low density polyethylene, vinyl aromatic polymer, polybutene and ionomer can be mentioned among others. When mixing with the said polyethylene resin, for example, vinyl aromatic polymer, polybutene and ionomer can be mentioned among others as the mixing component. The amount of the thermoplastic resin to be mixed in these cases is preferably not more than 20 parts by weight, based on 100 parts by weight of the polyolefine resin, more preferably 5 to 10 parts by weight.

The said expanded beads 8 may be produced, for example, by a pre-expansion. This is a method in which the said synthetic resin is processed to form a particle shape in advance, impregnated with a volatile blowing agent in a pressure vessel, stirred while being dispersed in water and heated up under pressure to a prescribed expansion temperature. Then this water dispersion is released into a low pressure region or the like. Among these expanded beads 8, for example, EPERAN PP (tradename mad by KANEGAFUCHI CHEMICAL INDUSTRY Co., Ltd. , expansion ratio is 15 times) can be suitably used among others.

In order to improve the adhesiveness of the said cellular molded article of a synthetic resin 2 obtained by cellular molding of these beads 8, to the thermoplastic resin skin material 3, a suitable adhesive can be applied beforehand to the backside surface 3b of this thermoplastic resin skin material 3 which will come into contact with the said expanded beads 8 if necessary. As an example of this adhesive, an organic solvent solution of synthetic resin, a resin emulsion, a resin powder or the like can be mentioned.

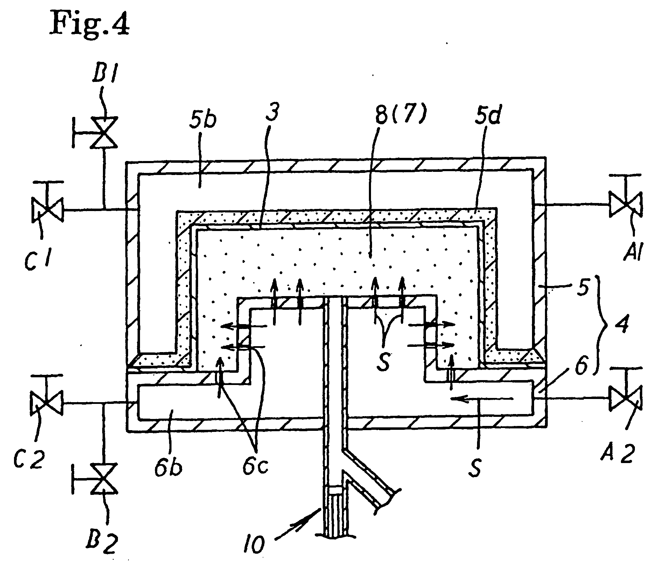

Then, as shown in Fig. 4, the steam valve A2 connected to the chamber 6b of the said the other mold part 6 is opened, and steam S is supplied into the molding chamber 7 through the said steam holes 6c, and the said expanded beads 8 are heated and expanded.

At this point, by pre-heating the said expanded beads 8 in advance to a temperature lower than the temperature of melt bonding the said expanded beads 8 together, before the main heating of these expanded beads 8 to a temperature higher than the temperature of melt bonding the said expanded beads 8 together, these expanded beads 8 can be heated sufficiently without melt bonding together.

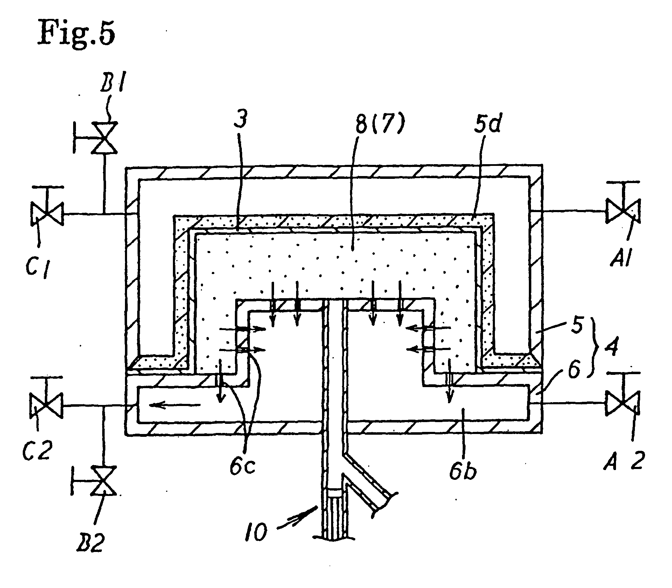

After the pre-heating, by keeping the condition for a prescribed time and steaming the said expanded beads 8 by steam S (this is called "steaming", hereinafter), the latent heat of steam S introduced between the said beads 8 can be utilized effectively. In particular, in the case of fabricating a cellular molded article of a synthetic resin having a surface skin 2 which is very thick or the like, an advantage is that the said expanded beads 8 can be heated more uniformly. This "steaming" may be carried out under the condition of continuous introduction of steam S. Alternatively, the "steaming" may be carried out with suspending the supply of steam S and with keeping the drain valve C2 open if necessary. After performing the "steaming" by steam S, moisture exists between the preexpanded beads 8, and since a poor melt bonding of the expanded beads 8 with each other can occur if the main heating is carried out under this condition, as shown in Fig. 5, for example, it is preferable that the said moisture in the molding chamber 7 is removed by vacuum pumping through the said vapor hole 6c or the like.

And after performing the "steaming" of the said expanded beads 8 by steam S, that is, during the said steam heating and before the expanding of the said expanded beads 8, since the said one mold part 5 is the upper part and the said the other part 6 is the lower part, the said moisture can be easily taken out through the lower vapor hole 6c by the above-mentioned vacuum pumping by utilizing the gravity power rather than going against it. Therefore, this moisture can be surely removed and the advantage is that none or little moisture remains in the said molding chamber 7.

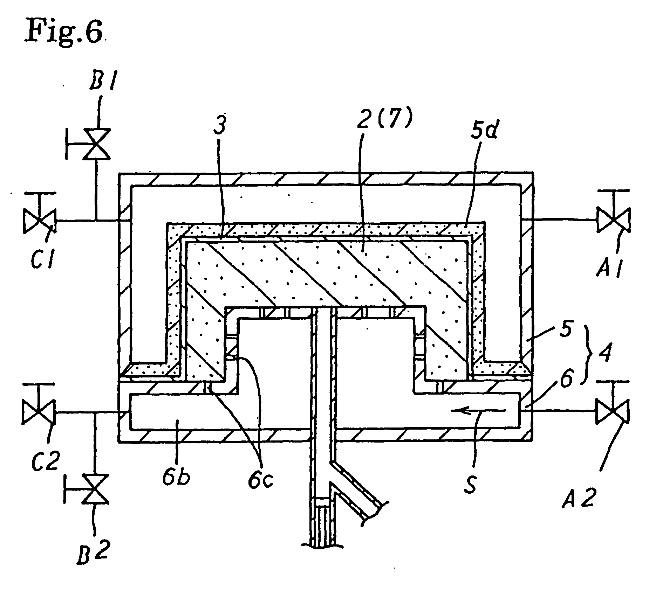

Net, the main heating is carried out at a temperature higher than the temperature at which said expanded beads 8 melt bond together. This main heating is, as shown in Fig. 6, carried out by opening the said steam valves A2 and supplying steam S through the said vapor hole 6c into the molding chamber 7. In the case of conducting vacuum pumping in the said molding chamber 7 to remove the moisture after performing the "steaming" by steam S as mentioned-above, the steam S for the said main heating can be supplied into the molding chamber 7 more easily. When main heating, in order to transfer enough heat by steam S to the said expanded beads 8, it is preferable to keep the condition for a prescribed time.

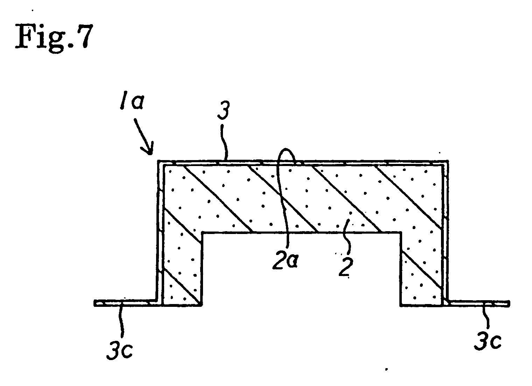

Next, by opening the mold after cooling the said mold 4, as shown in Fig. 7, there is obtained the cellular molded article of a synthetic resin having a surface skin 1a with an edge part 3c, for example, which article comprises the cellular molded article of a synthetic resin 2 obtained by the cellular molding of the said expanded beads 8, and the thermoplastic resin skin material 3 melt bonded and united with the surface 2a of the cellular molded article of synthetic resin 2. This cellular molded article of a synthetic resin having a surface skin 1a is preferably aged and dried after removing from the mold 4. When an unnecessary part such as the said edge part 3c is formed at the end of the said thermoplastic resin skin material 3 or the like, by cutting this edge part a cellular molded article of a synthetic resin having a surface skin 1 shown in Fig. 1 can be obtained.

As mentioned above, by main heating the said expanded beads 8 after pre-heating and performing "steaming" by steam S, a cellular molded article of a synthetic resin 2 can be melt bonded and united with the said thermoplastic resin skin material 3 along with the producing the cellular molded article of a synthetic resin 2 from expanded beads 8. Since said moisture can be surely removed, a cellular molded article of a synthetic resin having a surface skin 1 without a poor melt bonding of the expanded beads 8 can be produced.

In this embodiments 1, when setting the said thermoplastic resin skin material 3 on the said one mold part 5, the said two mold parts 5, 6 arse opened and clamped with a vertical motion and the said one mold part 5 is the upper part, the other part 6 is the lower part. However, this embodiment is not limited to this, but the above-mentioned condition is kept at least during the said steam heating and before expanding the said expanded beads 8.

That means, for example, that a molding machine or the like that can change the direction of the opening or clamping of the said two mold parts 5, 6 can be used. In this case, for example, in order to set the said thermoplastic resin skin material 3 more easily, the said two mold parts can be opened and clamped with a horizontal motion at the start, or with a vertical motion with the said one mold part 5 to be the lower part at the start and during the said steam heating and before expanding the said expanded beads 8. The said two mold parts are turned to be opened and clamped with a vertical motion and the said one mold part 5 is turned to be the upper part, the other part 6 to be the lower part. As its result, the moisture can be removed easily. After removing the moisture, the mold parts can be turned back to the original position again to separate the obtained cellular molded article of a synthetic resin having a surface skin 1 from the mold easily.

Moreover, before setting the thermoplastic resin skin material 3 on the said one mold part 5, the unevenness for a product design pattern such as a skin emboss can be formed in advance on the surface 3a of the thermoplastic resin skin material 3 or, in case of cellular molding of the expanded beads 8 by the said steam heating, the unevenness for the product design pattern such as a skin emboss formed in advance on the surface 5a of the said one mold part 5 can be printed on the surface 3a of the thermoplastic resin skin material 3.

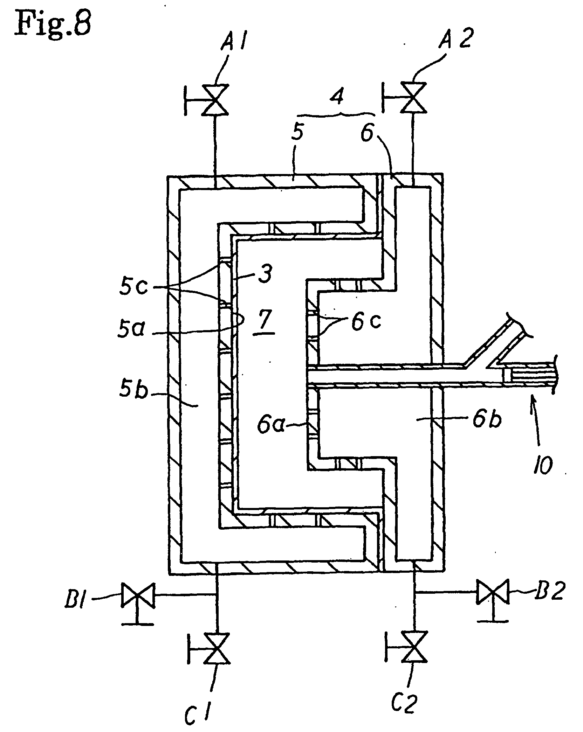

As shown in Fig. 8 to Fig. 11, in the method for producing a cellular molded article of a synthetic resin 1 having a surface skin according to the embodiment 2 the said fine unevenness 9 having 5 to 150 µm of amplitude and 30 to 600 µm of wavelength in the surface roughness waveshape, measured by the surface roughness measuring instrument, is formed in advance on the surface 5a of the said one mold part 5 having plural number of decompression holes 5c connecting to the said chamber 5b. When melt bonding the said expanded beads 8 along with melt bonding and uniting these expanded beads 8 with the thermoplastic resin skin material 3 there is effected a printing of the said fine unevenness 9 onto the surface 3a of the thermoplastic resin skin material 3 to make the surface roughness of a prescribed range D of the thermoplastic resin skin material 3 where it is pressed harder to the surface 5a of said one mold part 5 by the expanding force F of the said expanded beads 8. The surface roughness of the other range E is approximately the same. Therefore the surface roughness of this thermoplastic resin skin material 3 is kept approximately constant.

And as shown in Fig. 8, the said mold 4, for example, can be opened and clamped with a horizontal motion in this embodiment. However, as it is in the said embodiment 1, the said one mold part 5 may be the upper part and the other part 6 may be the lower part at least during the said steam heating and before expanding the said expanded beads 8.

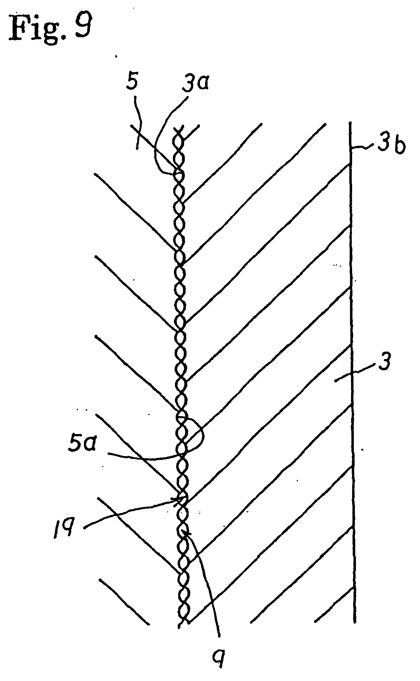

As shown in Fig. 9, the fine unevenness 19 is formed in advance on the surface 3a of the said thermoplastic resin skin material 3 by mat processing of a prescribed roughness which is the same as it is in the case of normal conditions.

The fine unevenness 9 having 5 to 150 µm of amplitude and 30 to 600 µm of wavelength in the surface roughness waveshape measured by the surface roughness measuring instrument is formed in advance on the surface 5a of the said one mold part 5. In order to form this fine unevenness 9, for example, various conventional techniques such as blasting and etching can be utilized.

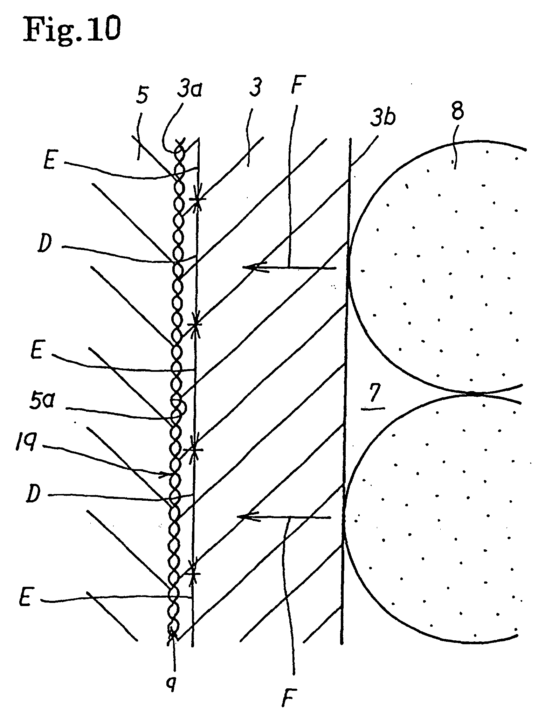

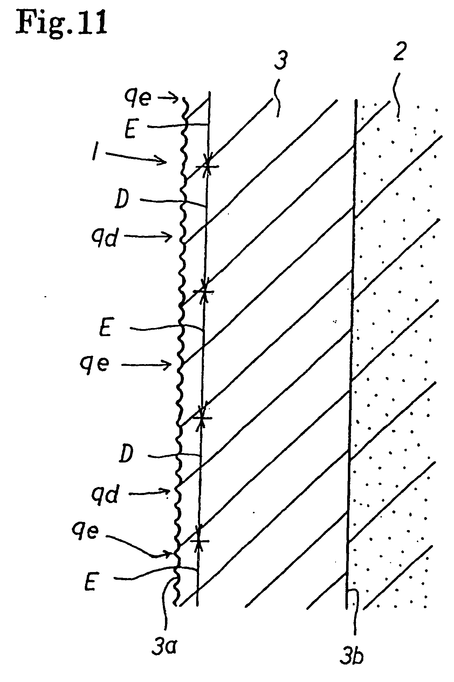

When performing the said main heating, as shown in Fig. 10, the prescribed range D of the surface 3a of the said thermoplastic resin skin material 3 is pressed against the surface 5a of the said one mold part 5 harder than the other range E from the backside 3b by the expanding force F of the said expanding beads 8. Under this condition, since the said thermoplastic resin skin material 3 is softened by steam heating, as shown in Fig. 11, the said fine unevenness 9 formed in advance on the surface 5a of the said one mold part 5 is printed on, and 'the fine unevenness 9d is formed in the said range D where it pressed harder as mentioned above.

Also, since the said the other range E is pressed against the surface 5a of the said one mold part 5 by a force being smaller than that in range D, the said fine unevenness 9 is printed on the other range E and the fine unevenness 9e is formed. In this case, since the strength of the force pressing against the surface 5a of the said one mold part 5 is different in the said range D and in the other range E, the roughness of the formed fine unevenness 9d, 9e may be different. However, by forming the fine unevenness 9 of the roughness in the above-mentioned range in advance on the surface 5a of the said one mold part 5, the roughness of these fine unevenness 9d and 9e can be made to be about the same pattern. Accordingly, the surface roughness of the said thermoplastic resin skin material 3 is approximately kept in a constant level, and it is advantageous that the beads pattern as in conventional process does not appear and an excellent appearance can be obtained more efficiently.

It is preferable that the roughness of the said fine unevenness 9 has a waveshape of a surface roughness in which the amplitude is from 5 to 150 µm, and the wavelength is from 30 to 600 µm, more preferably the amplitude is from 7 to 100 µm and the wavelength is from 50 to 400 µm, most preferably the amplitude is from 10 to 70 µm and the wavelength is from 60 to 300 µm.

The surface roughness of the said range, for example, corresponds to the roughness of from #1000 (No. 1000), to #100 (No. 100) of sandpaper or the like.

As an example of the said surface roughness measuring instruments, a touching needle type surface roughness measuring instrument (e.g. made by TOKYO SEIMITSU Co, tradename: SAFUKOMU 570A, 5 µmR of the touching needle tip) or a non-touching surface roughness measuring instrument (e.g. made by PERUTEN Co. Amp-part type: PERUTOMETER-S3P, sensor part type : non-touching probe, FOCODIN) can be mentioned.

When the roughness of the said fine unevenness 9 is finer than 5 µm of amplitude and 30 µm of wavelength, the roughness of the said fine unevenness 9 is too fine, as it is in the afore-mentioned conventional method (b). It is not preferable because the beads pattern as a result of the roughness of the fine unevenness 9d of the said range D appears finer than the roughness of the fine unevenness 9e of the other range E. When exceeding 150 µm of amplitude and 600 µm of wavelength the roughness of the said fine unevenness 9 is too rough. This is also not preferable because the beads pattern appears different from the above-mentioned one as a result of the roughness of the said fine unevenness 9d being rougher than that of the said fine unevenness 9e.

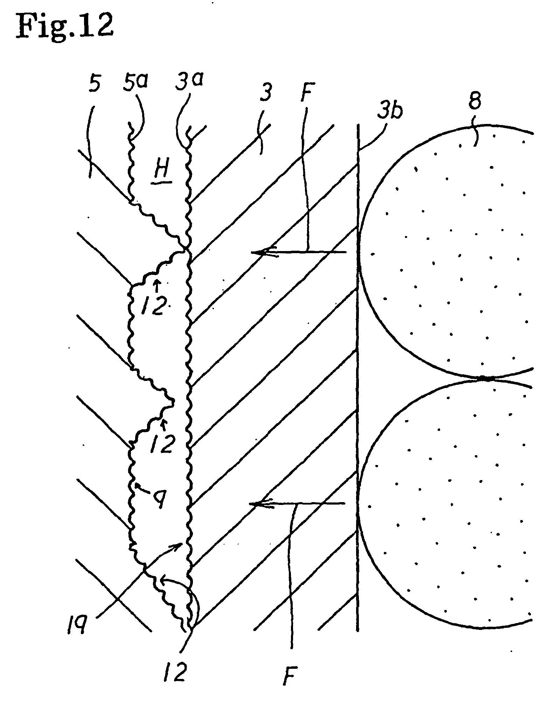

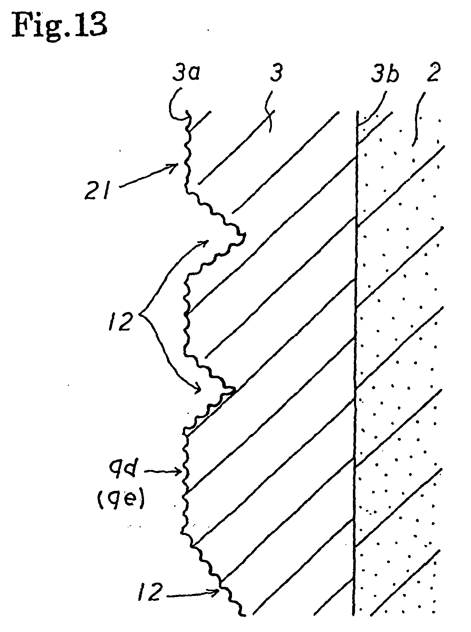

Fig. 12 and Fig. 13 show a method for producing the cellular molded article of a synthetic resin having a surface skin 21 according to the embodiment 3. It differs from embodiment 2 in so far as the unevenness 12 for the product design is formed in addition to the said fine unevenness 9 in advance on the surface 5a of the said one mold part 5. When printing the said fine unevenness 9 on the surface 3a of the said thermoplastic resin skin material 3, the said unevenness for product design pattern 12 is also printed.

As an example of the said unevenness for the product design pattern 12, a skin emboss can be mentioned among others. The said fine unevenness 9 may be also formed on the surface of this unevenness for the product design pattern 12. This unevenness for the product design pattern 12 can be formed by utilizing various conventional techniques. When forming these unevenness for the product design pattern 12 and the fine unevenness by etching, she fine unevenness 9 is preferably formed after forming the unevenness for the product design pattern 12 to let the said unevenness for the product design pattern 12 appear clearly.

When forming the said unevenness for the product design pattern 11, as shown in Fig. 12, even in the case of setting the said thermoplastic resin skin material 3 with a gap H to the surface 5a of said one mold part 5, the whole thermoplastic resin skin material 3 is pressed against the said one mold part 5 during the cellular molding of the said expanded beads 8, and the said unevenness for the product design pattern 12 is printed on the surface 3a of the said thermoplastic resin skin material 3, as shown in Fig. 13, and also the said fine unevenness 9 is printed and the fine unevenness 9d (9e) is formed by performing the same operation as in case of the embodiment 2. Accordingly, as it is for the above-mentioned embodiment 2, when the roughness of the said fine unevenness 9 is made to be within the above-mentioned range the surface roughness of the thermoplastic resin skin material 3 containing the said unevenness for the product design pattern 12 is approximately kept to be constant.

Thus by forming the unevenness for the product design pattern 12 in addition to the said fine unevenness 9 in advance on the surface 5a of the said one mold part 5, the cellular molded article of a synthetic resin 21 having an unevenness for the product design pattern 12 can be produced without leaving a beads pattern. Accordingly, the high-grade feeling can be added to the cellular molded article of a synthetic resin having a surface skin 21.

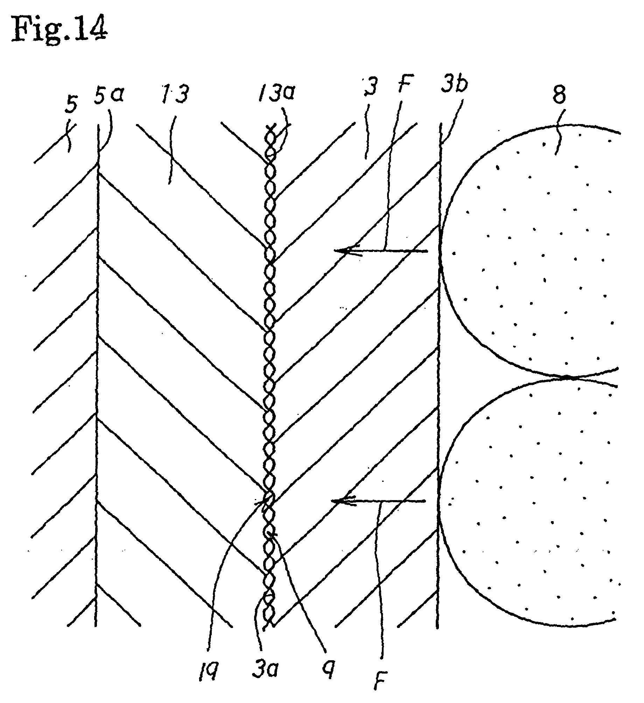

Fig. 14 shows a method for producing a cellular molded article of a synthetic resin having a surface skin 1 according to the embodiment 4. It differs from the above-mentioned embodiment 2 in so far as the unevenness printing material 13 is applied in advance to the surface 5a of the said one mold part 5, and when melt bonding the said expanded beads 8 together along with melt bonding and uniting these expanded beads 8 with the said thermoplastic resin skin material 3, the surface roughness of this thermoplastic resin skin material 3 is kept to be approximately constant by printing a fine unevenness 9 formed on the surface 13a of the said unevenness printing material 13 on the surface 3a of the thermoplastic resin skin material 3. This makes the surface roughness of a prescribed range of the thermoplastic resin skin material 3 which is pressed harder on the surface 13a of the unevenness printing material 13 with the expanding force F of the said expanding beads 8 and the surface roughness of the other range to be approximately the same.

As examples of the said unevenness printing material 13, metal board, board of a synthetic resin, sand cloth, sandpaper or water resistant sand paper and net plane material made of metal or synthetic resin can be mentioned. The said unevenness printing material 13 can be formed to fit to the shape of the surface 5a of the said one mold part 5, and on the surface 13a, the unevenness 9 can be formed by etching, blasting or sticking microparticles or the like. Then with turning this fine unevenness 9 outside, the said unevenness printing material 13 is stuck to the surface 5a of the said one mold part 5 in advance by means of an adhesive or the like or magnetic sticking. The time of forming the said fine unevenness 9 and the time of forming this unevenness printing material 13 to fit to the shape of the surface 5a of the said one mold part 5 are not particularly limited. A plurality of connecting holes or the like getting through the decompressing hole 5c of the said one mold part 5 can be formed if necessary.

Thus in the case of attaching the said unevenness printing material 13 on the surface 5a of said one mold part 5, by operating as mentioned above, the cellular molded article of a synthetic resin having a surface skin 1 according to the embodiment 2 can be produced. Therefore, the advantage is that the present facility can be utilized as it is, and if this unevenness printing material 13 is removable, also the advantage is that it can be utilized in various facilities.

In case that the fine unevenness 9 is formed on the surface 13a of the said unevenness printing material 13 the scope of this invention is not limited to this. The unevenness for the product design pattern 12 in addition to the said fine unevenness 9 can be formed on the surface 13a of the unevenness printing material 13 according to said embodiment 3.

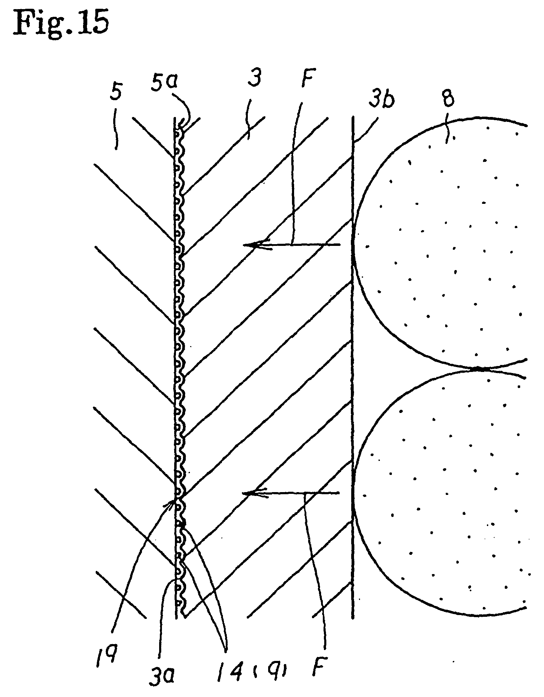

Fig. 15 shows a method for producing the cellular molded article of a synthetic resin having a surface skin 1 according to the embodiment 5. It differs from the above-mentioned embodiment 2 in so far as after smoothing the surface 5a of the said one mold part 5 on which a fine unevenness 9 of the same roughness as the above is formed in advance by sticking an unevenness printing particle substance 14, the surface roughness of this thermoplastic resin skin material 3 is approximately kept on a constant level by printing the said fine unevenness 9 to the surface 3a of the thermoplastic resin skin material 3 to make the surface roughness of the thermoplastic resin skin material 3 of a prescribed range which is pressed harder by the expanding force F of the said expanded beads 8 and the surface roughness of the other range to be approximately the same when melt bonding of the said expanded beads 8 together and melt bonding and uniting these expanded beads 8 with the said thermoplastic resin skin material 3.

As an example of the said unevenness printing particle substance 14, a metal powder or the like can be mentioned, and the said unevenness printing particle substance 14 can be stuck to the surface 5a of the said one mold part 5 by means of adhesives or the like or by magnetic sticking. As to its particle size, the roughness of the fine unevenness 9 formed by this unevenness printing particle substance 14 can have a waveshape in which the amplitude is 5 to 150 µm and the wavelength is 30 to 600 µm measured by the afore-mentioned surface roughness measuring instrument.

Thus when forming a fine unevenness 9 on the surface 5a of the one mold part 5 by utilizing the said unevenness particle substance 14, as in case of the above-mentioned embodiment 4, the cellular molded article of synthetic resin having surface skin 1 as in the embodiment 2 can be produced. Therefore, the advantage is that the present facility can be utilized as it is.

If a fine unevenness 9 is formed on the surface 5a of the said one mold part 5 by the said unevenness printing particle substance 14, the scope of this invention is not limited to this. As in the said embodiment 3, an unevenness for a product design pattern 12 in addition to the fine unevenness 9 formed by the said unevenness printing particle substance 14 can be formed on the surface 5a of the said one mold part 5.

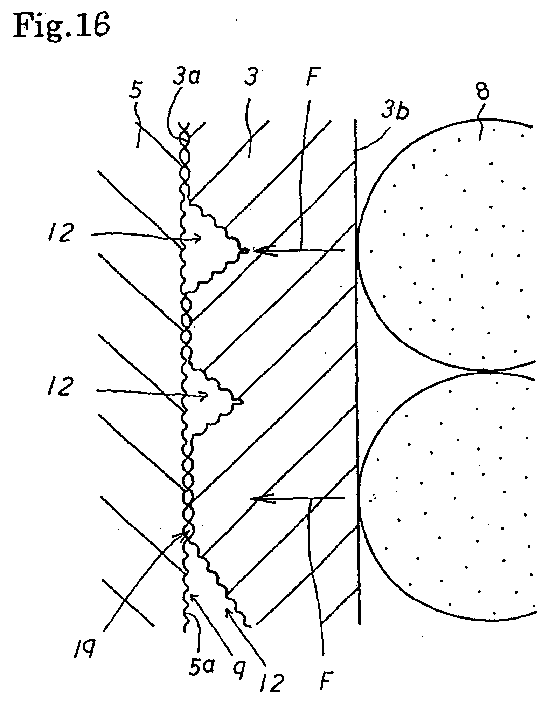

Fig.16 shows a method for producing a cellular molded article of a synthetic resin having a surface skin 21 according to the embodiment 6. It differs from the above-mentioned embodiment 2 in so far as the unevenness for the product design pattern 12 is formed in advance on the surface 3a of the thermoplastic resin skin material 3 before setting the thermoplastic resin skin material 3 on the said one mold part 5.

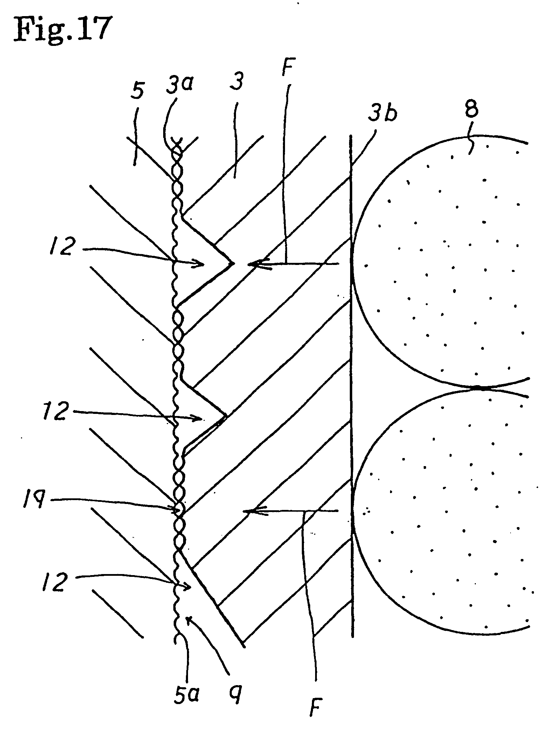

As the methods for forming the unevenness for a product design pattern 12 on the surface 3a of the said thermoplastic resin skin material 3, for example, various conventional methods such as a method using an embossing machine can be utilized. The surface of the said unevenness for a product design pattern can be formed to the fine unevenness 19 by mat, processing according to this embodiment or can be smoothed as shown in Fig. 17.

As shown in Fig.16, by operating according to the said embodiment 2 after setting this thermoplastic resin skin material 3 on the surfaces 5a of the said one mold part 5, the said fine unevenness 9 is printed on the surface 3a of the thermoplastic resin skin material 3 to make the surface roughness of the thermoplastic resin skin material 3 of a prescribed range which is pressed harder on the surface 5a of said one mold part 5 by the expanding force F of the said expanded beads 8 and the surface roughness of the other range to be approximately the same. Consequently, the cellular molded article of the synthetic resin having a surface skin 21, as in the above-mentioned embodiment 3 shown in Fig. 13 can be produced.

Thus, even if the unevenness for the product design pattern 12 is formed in advance on the surface 3a of the said thermoplastic resin skin material 3, as in the above-mentioned embodiment 3, the advantages are that the appearance of the obtained cellular molded article of a synthetic resin having a surface skin 21 is excellent, and a high-grade feeling can be added by the said unevenness for the product design pattern 12. Moreover, since it is not necessary to form an unevenness for the product design pattern 12 on the surface 5a of the said one mold part 5, the costs can be reduced.

If the thermoplastic resin skin material 3 having the said unevenness for the product design pattern 12 is set on the said one mold part 5 having a fine unevenness 9 on the surface 5a the scope of this invention is not limited to this. As shown in the above-mentioned embodiment 4 or 5, the said thermoplastic resin skin material 3 can be set on the unevenness printing material 13 attached to the surface 5a of the said one mold part 5 or can be set on the surface 5a of the said one mold part 5 having a fine unevenness 9 formed by the said unevenness printing particle substance 14.

In the embodiments 1 to 6, if the said one mold part 5 is a concave mold (female type) whose horizontal section is made concave the scope of this invention is not limited to this. A mold comprising one mold part 5 being a convex mold part (male type) whose horizontal section has a convex shape, and the said other mold part 6 being a concave mold part (female type) whose horizontal section has a concave shape. can be also used.

Next, the case of a so-called afterward stuck molding is described.

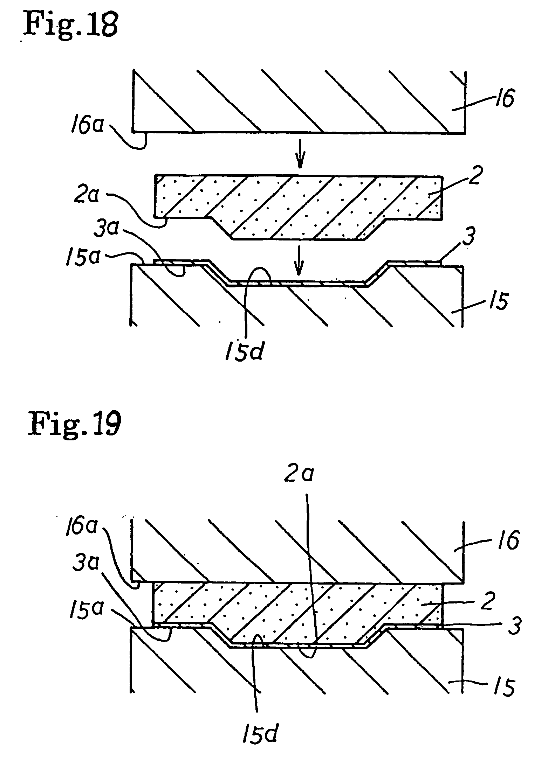

Fig. 18 to 24 show a method for producing a cellular molded article of a synthetic resin having a surface skin 31 according to the embodiment 7. It is a method for producing a cellular molded article of a synthetic resin having a surface skin 31 in which a cellular molded article of a synthetic resin 2 and a thermoplastic resin skin material 3 are set between two mold parts 15, 16. When clamping the two mold parts and pressurizing them, the cellular molded article of a synthetic resin 2 and the thermoplastic resin skin material 3 are melt bonded and united, for example, by heat. A fine unevenness 9 of the same roughness as in case of the above-mentioned embodiment 2 is formed in advance on the surface 15a of one mold part 15 which will come into contact with the said thermoplastic resin skin material 3. When melt bonding and uniting the said cellular molded article of a synthetic resin 2 with the said thermoplastic resin skin material 3, the printing of the said fine unevenness 9 makes the surface roughness of the thermoplastic resin skin material 3 of a prescribed range D which is pressed harder on the surface 15a of the said one mold part 15 with the pressurizing force G and the surface roughness of the other range E to be approximately the same on the surface 3a of the thermoplastic resin skin material 3, the surface roughness of this thermoplastic resin skin material 3 being approximately kept to be constant.

More precisely, as shown in Fig. 18, at the start the cellular molded article of a synthetic resin 2 and the thermoplastic resin skin material 3 are set between the said two mold parts 15, 16 and as shown in Fig. 19, the mold parts are clamped.

The said two mold parts 15, 16, for example, can be opened and clamped with a vertical motion, said one mold part 15 which will come into contact with the said thermoplastic resin skin material 3 is set to be the lower mold part and the other mold part 16 which will come into contact with the said cellular molded article of a synthetic resin 2 is set to be the upper mold part. A concave mould part 15d is formed to fit to the shape of the surface 2a of the said cellular molded article of a synthetic resin 2 on the surface 15a of the said one mold part 15, and the surface 16a of the said other mold part 16 is smoothed. moreover, at least the said one mold part 15 can optionally be designed such that it can be heated up to a prescribed temperature by steam, electric heating element or the like.

The said cellular molded article of synthetic resin 2 is formed into a prescribed shape in advance by cellular molding of the said expanded beads 8.

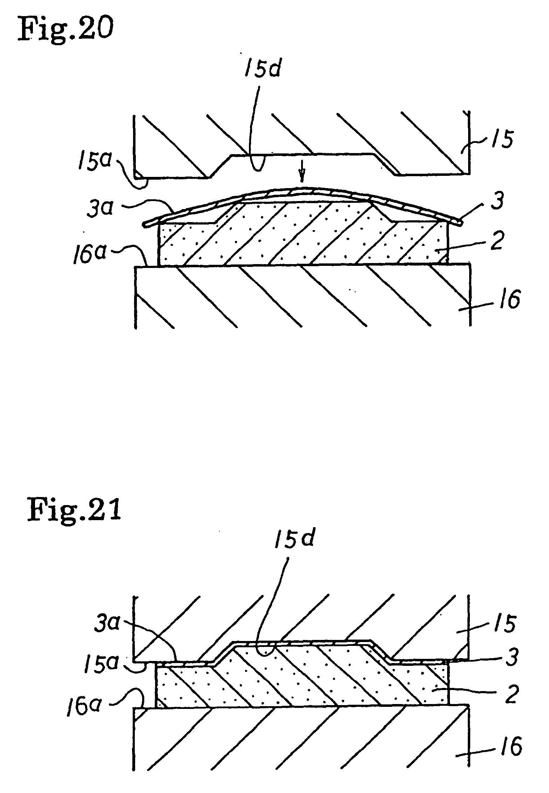

In order to set the said thermoplastic resin skin material 3, for example, the thermoplastic resin skin material 3 can be formed in advance to fit to the shape of the surface 15a of the said one mold part 15 by vacuum forming or the like using another molding chamber or the like. Alternatively, without pre-forming or the like, for example, as shown in Fig. 20 and 21, the said one mold part 15 is made to be the upper mold part and the said other mold part 16 is made to be the lower mold part. The said thermoplastic resin skin material 3 can be set on top of the cellular molded article of a synthetic resin 2. In this case, when clamping and pressurizing the two mold parts 15, 16 as shown in Fig. 21, the two mold parts 15, 16 are preferably heated up for an easy forming.

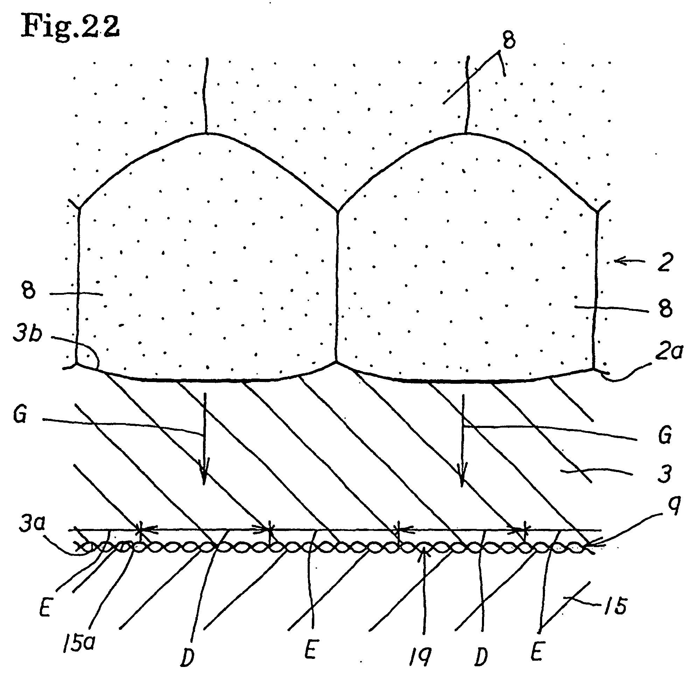

As shown in Fig. 22, under the condition of Fig. 19, when pressurizing the mold by the pressurizing force G, the said cellular molded article of a synthetic resin 2 and the thermoplastic resin skin material 3 are melt bonded and united by heat. In this case, the heating can be performed in any time selected from before setting the cellular molded article of a synthetic resin 2 and the thermoplastic resin skin material 3, or after setting these materials, or after clamping the mold, or after pressurizing the mold, or at the same time of setting, clamping or pressurizing. Optionally, the heating may be performed in advance to a prescribed temperature, and at a prescribed stage, the temperature may be raised to the temperature at which the cellular molded article of a synthetic resin 2 and the thermoplastic resin skin material 3 are melt bonded. Optionally, the heating may be performed in advance up to at a temperature higher than the temperature at which the cellular molded article of a synthetic resin 2 and the thermoplastic resin skin material 3 are melt bonded. At a prescribed stage the heating may be stopped and the melt bonding may be performed by the kept heat. In any method, it is important to be able to melt bond and unite the cellular molded article of a synthetic resin 2 and the thermoplastic resin skin material 3 under pressure.

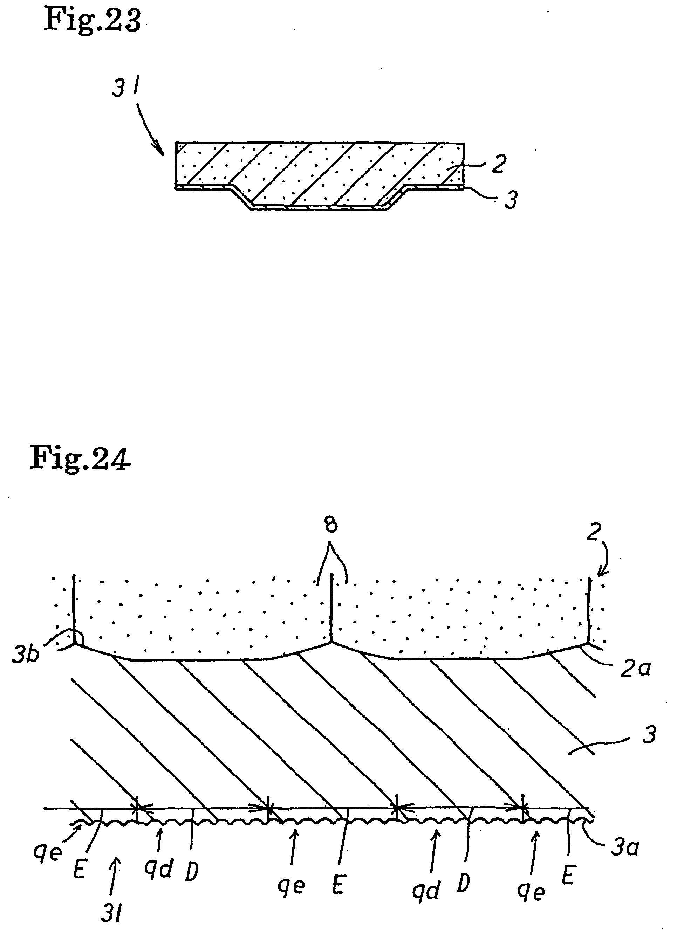

When the mold parts are opened after cooling or the like, as shown in Fig. 23, the cellular molded article of a synthetic resin having a surface skin 31 can be obtained.

Moreover, a fine unevenness 19 is formed in advance on the surface 3a of the said thermoplastic resin skin material 3 by mat processing with a prescribed roughness as it is under the normal condition as shown in Fig. 22. A fine roughness 9 having 5 to 150 µm of Amplitude and 30 to 600 µm of a wavelength of a surface roughness waveshape measured by the said surface roughness measuring instrument is formed in advance on the surface 15a of the said one mold part 15.

In this case, since the surface 2a of the said cellular molded article of a synthetic resin 2 is not smoothed, by the pressurizing force G a prescribed range D of the surface 3a of the said thermoplastic resin skin material 3 is pressed harder than the other range E against the surface 15a of the said one mold part 15 from the backside 3b. As for the above-mentioned embodiment 2, since the said thermoplastic resin skin material 3 is softened by heat under this condition, as shown in Fig. 24, by printing the said fine unevenness 9 formed in advance on the surface 15a of the said one mold part 15, a fine unevenness 9d is formed in the said range D.

Also, since the said the other range E is pressed against the surface 15a of the said one mold part 15 by a force smaller than that in the range D, the said fine unevenness 9e is formed in this other range E by printing the said fine unevenness 9. Since the roughness of the said fine unevenness 9 is made to be in the above-mentioned range, the roughness of the said fine unevenness 9d, 9e can be approximately the same. Consequently, the surface roughness of the said thermoplastic resin skin material 3 is approximately kept constant, and it is advantageous that the previous beads pattern does not appear and that the appearance of the product can be improved more.

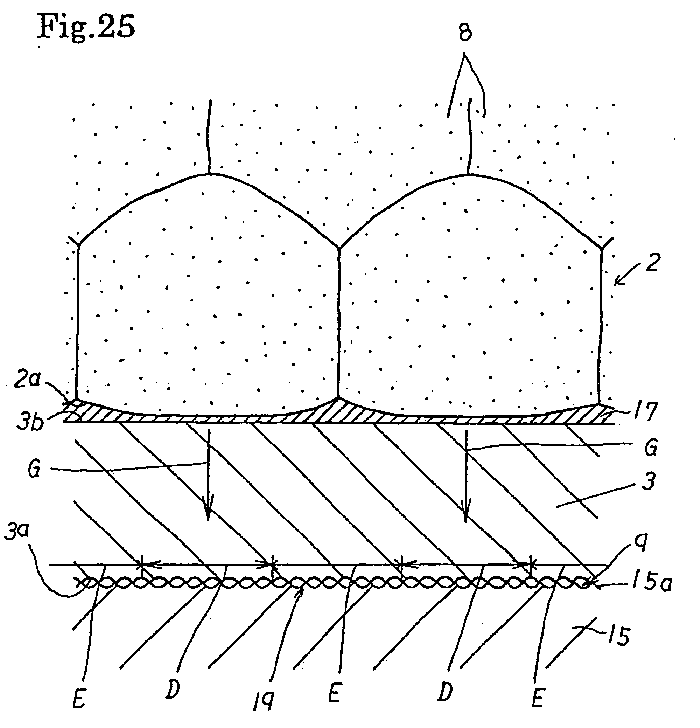

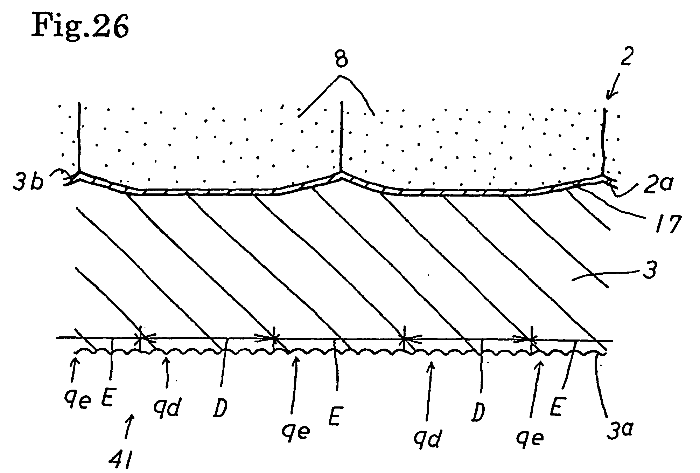

Fig. 25 and 26 show a method for producing a cellular molded article of a synthetic resin having a surface skin 41 according to the embodiment 8. It is a method wherein in the above-mentioned embodiment 7 adhesive 17 is applied between the said cellular molded article of a synthetic resin 2 and the thermoplastic resin skin material 3. The melt bonding and uniting of the cellular molded article of synthetic resin 2 and the thermoplastic resin skin material 3 is carried out by both heat and adhesive 17.

As examples of the said adhesive 17 as used in the case of the said simultaneous united molding, for example, a synthetic resin dissolved in an organic solvent, a resin emulsion, a resin powder or the like can be mentioned. This adhesive 17 may be applied in advance to the backside 3b of the thermoplastic resin skin material 3 or the surface 2a of the said cellular molded article of a synthetic resin 2.

In the case of using a method in which the said cellular molded article of a synthetic resin 2 and the thermoplastic resin skin material 3 are set between two mold parts 15, 16 and then the clamping and pressurizing of the two mold parts follow, said article and said skin material 3 are melt bonded and united by heat and adhesive, as shown in Fig. 25 and as it is with the above-mentioned the embodiment 7. Since the surface 2a of the said cellular molded article of a synthetic resin 2 is not smoothed, the prescribed range D of the surface 3a of the said thermoplastic resin skin material 3 is pressed harder than the other range E by the pressurizing force G. Therefore, as shown in Fig. 26, by printing the fine unevenness 9 on the surface 3a of this thermoplastic resin skin material 3, the fine unevenness 9d, 9e is formed. Since the said fine unevenness 9 is made to be in the above-mentioned range, the roughness of the fine unevenness 9d, 9e can be made to be about the same. Consequently, the beads pattern does not appear.

Thus, when using the said adhesive 17, the adhesiveness between the said cellular molded article of a synthetic resin 2 and the thermoplastic resin skin material 3 can be improved. When using the suitable adhesive 17, adhering can be performed even at a temperature below the melting point of the said cellular molded article of a synthetic resin 2. Therefore, the advantage is that heating to such a high temperature is not necessary.

In this embodiment, the cellular molded article of a synthetic resin 2 and the thermoplastic resin skin material 3 are melt bonded and united by both heat and adhesive 17. However, the scope of this invention is not limited to this. They can be bonded and united by an adhesive 17 without heat. As the adhesive 17 in this case, an adhesive which has adhesiveness at room temperature or which cures at room temperature or the like can be used. Thus, when the uniting by an adhesive 17 is carried out, as mentioned above, a fine unevenness of approximately the same roughness 9d, 9e is formed on the surface 3a of the said thermoplastic resin skin material 3 by the pressurizing force G. Consequently, the beads pattern does not appear.

In the embodiments 7 and 8, the said two mold parts 15, 16 are opened and clamped with a vertical motion. However, the scope of this invention is not limited to this. The mold parts can be opened and clamped also with a horizontal motion.

In case that the fine unevenness 9 is formed on the surface 15a of the said one mold part 15, the scope of this invention is not limited to this. As in the above-mentioned embodiments 3 to 6, the unevenness for a product design pattern 12 in addition to the said fine unevenness 9 can be formed in advance on the surface 15a of the said one mold part 15 or the unevenness for the product design pattern 12 can be formed in advance on the surface 3a of the said thermoplastic resin skin material 3. Furthermore, the said unevenness printing material 13 can be used, or the said fine unevenness 9 can be formed by an unevenness printing particle substance 14.

As mentioned above for the embodiments 2 to 8, the surface 3a of the said thermoplastic resin skin material 3 is mat processed with an appropriate roughness, but the surface roughness of this thermoplastic resin skin material 3 is not particularly limited to this, it can also be very rough or very fine.

That means, even in the case of being very rough or very fine, by adjusting the roughness of the said fine unevenness 9 to be about the same as the original surface roughness of the said thermoplastic resin skin material 3 in advance, the roughness of the fine unevenness 9d, 9e formed in the said range D and in the other range E, respectively, in the said simultaneous united molding or in the afterward attached molding can be made to be about the same. Consequently, the surface roughness of the said thermoplastic resin skin material 3 is approximately kept constant, and the previous beads pattern does not appear. Therefore, the advantage is that various kinds of thermoplastic resin skin material 3 can be used.

Here, the roughness of the said fine unevenness 9 and the surface roughness of the said thermoplastic resin skin material 3 are most preferably the same. However, when they are not the same, the difference of waveshape between them is not more than 50 µm of amplitude and not more than 200 µm of wavelength, preferably not more than 40 µm of amplitude and not more than 150 µm of wavelength, more preferably not more than 30 µm of amplitude and not more than 100 µm of wavelength, measured by a surface roughness measuring instrument. Anyone of them can be rougher than the other.

The difference mentioned here is determined by comparing the amplitude and the wavelength, respectively, and means the maximum value calculated by the differences of both the amplitude and the wavelength if they become a maximum.

When the said difference is within the above mentioned range, the roughness of the said fine unevenness 9d, 9e formed on the surface 3a of the said thermoplastic resin skin material 3 by printing the said fine unevenness 9 can be approximately the same. Consequently, the advantage is that the appearance of the product can be improved still more efficiently. And when the surface roughness of the said one mold part 5 and of the thermoplastic resin skin material 3 are the same or very similar, the printing of the said fine unevenness 9 is not necessarily essential to achieve the above mentioned object which aims at the avoiding of the beads pattern. However, for example, when the unevenness for the product design pattern 12, such as a skin emboss, is formed on the surface 5a of the said one mold part 5, the printing of this unevenness for the product design pattern 12 is essential, and the cases wherein the printing of the said fine unevenness 9 is not necessarily essential are also involved in the production of the cellular molded article of a synthetic resin having a surface skin 1, 21, 31, or 41.

When the difference of the waveshape between the roughness of the said fine unevenness 9 and the surface roughness of the said thermoplastic resin skin material 3 exceeds both 50 µm of amplitude and 200 µm of wavelength and the surface roughness of the said thermoplastic resin skin material 3 is rougher, the roughness of the fine unevenness 9d of the said range D becomes finer than the roughness of the fine unevenness 9e of the other range E, and the beads pattern appears which is not preferable. Conversely, when the surface roughness of the said thermoplastic resin skin material 3 is finer, the roughness of the said fine unevenness 9d becomes rougher than the roughness of the said fine unevenness 9e, and the beads pattern appears with the opposite contrast which is also not preferable.

As above-mentioned, when the roughness of the said fine unevenness 9 and the surface roughness of the said thermoplastic resin skin material 3 are about the same, these roughnesses are not particularly limited and they can also be very rough or very fine. The case wherein the roughness is very rough corresponds to the above mentioned waveshape exceeding both about 150 µm of amplitude and about 600 µm of wavelength. The case wherein the roughness is very fine corresponds to the above-mentioned waveshape which is less than about 5 µm of amplitude and less than about 30 µm of wavelength. When these values are compared with the surface roughness of sandpaper or the like, for example, the said case of being very rough corresponds to the case of being rougher than about No. 100, and the said case of being very fine corresponds to the case of being finer than about No. 1000.

This means that if the both roughnesses are about the same, any roughness can be permitted. The case wherein both the surface 5a of the said one mold part 5, and the surface 3a of the said thermoplastic resin skin material 3 are formed to approximate smoothness and the roughness of the said fine unevenness 9, 19 is ultra fine is also involved in the case of being very fine.

Next, this invention is further illustrated by the following examples, however, the scope of this invention is not limited to these examples.

### EXAMPLE 1

A laminated sheet made of a vinyl chloride resin sheet (thickness: 0,5 mn) and a polypropylene resin extruded foam sheet (thickness: 2,5 mnl was used as the thermoplastic resin skin material, and one of two mold parts defining the molding chamber was set to be the upper mold part and the other mold part was set to be the lower mold part. vacuum forming of the thermoplastic resin skin material was performed in a manner that the said vinyl chloride surface stuck to- the surface of the one mold part. After clamping the mold parts, EPERAN PP (tradename, made by KANEGAFUCHI CHEMICAL INDUSTRY Co. Ltd., expansion ratio was 15 times, imparted with 2 kg/cm² of inner pressure in advance by using air pressure) as expanded beads was charged into the molding chamber.

Next, steam (0,7 kg/cm² • G) was supplied into the molding chamber through vapor holes formed in the said the other mold part, and pre-heating was performed. After the "steaming" of the expanded beads for 5 seconds, moisture and steam were removed to make the pressure in the molding chamber less than 500 mm Hg by using a vacuum pump.

Then, steam (3,2 to 3,7 kg/cm² • G) was supplied into the molding chamber again through the said vapor holes, and after a main heating for 3 to 5 seconds, it was cooled by water and cooled by room air. Then the mold parts were separated and the cellular molded synthetic resin having a surface skin was obtained.

### EXAMPLE 2

The conditions of Example 2 were the same as those of Example 1 except for using a laminated sheet of a polyolefin resin sheet (thickness: 0,75 mm) and a polypropylene extruded foam sheet (thickness: 2,5 mm) as the thermoplastic resin skin material, and without performing "steaming". Under such conditions the cellular molded article of a synthetic resin having a surface skin was obtained.

### EXAMPLE 3

The conditions of Example 3 were the same as those of Example 1 except for using EPERAN PP (tradename, made by KANEGAFUCHI CHEMICAL INDUSTRY Co. Ltd., imparted with 2 kg/cm² of inner pressure in advance by using air pressure) whose expansion ratio was 30 times as expanded beads, and supplying steam of a pressure of 0,5 kg/cm² • G at pre-heating and supplying steam with a pressure of 2,4 to 2,8 kg/cm² • G at the main heating. Under such conditions the cellular molded article of a synthetic resin having a surface skin was obtained.

### EXAMPLE 4

The conditions of Example 4 were the same as those of Example 3 except for using a laminated sheet of a polyolefin resin sheet (thickness: 0,75 mm) and a polypropylene resin extruded foam sheet (thickness: 2,5 mm) , without performing "steaming". Under such conditions the cellular molded article of a synthetic resin having a surface skin was obtained.

### COMPARATIVE EXAMPLE 1

The conditions of Comparative Example 1 were the same as those of Example 1 except that the said one mold part was set to be the lower mold part and the other mold part was set to be the upper mold part. Under such conditions the cellular molded article of a synthetic resin having a surface skin was obtained.

### COMPARATIVE EXAMPLE 2

The conditions of Comparative Example 2 were the same as those of Examples 2 except that the said one mold part was set to be the lower mold part and the other mold part was set to be the upper mold part. Under such conditions the cellular molded article of a synthetic resin was obtained.

### COMPARATIVE EXAMPLE 3

The conditions of Comparative Examples 3 were the same as those of Example 3 except that the said one mold part was set to be the lower mold part and the other mold part was set to be the upper mold part. Under such conditions the cellular molded article of a synthetic resin having a surface skin was obtained.

### COMPARATIVE EXAMPLE 4

The conditions of Comparative Example 4 were the same 'as those of Example 4 except that the said one mold part was set to be the lower mold part and the other mold part was set to be the upper mold part. Under such conditions the cellular molded article of a synthetic resin having a surface skin was obtained.

As the physical properties of the cellular molded articles of a synthetic resin having a surface skin obtained in Examples 1 to 4 and Comparative Examples 1 to 4, (a) the melt bonding ratio of expanded beads and (b) the adhesiveness between the cellular molded article of a synthetic resin and the thermoplastic resin skin material were evaluated by the following methods. The results were shown in Table 1.

### (a) Melt bonding ratio of expanded beads

Using a knife, a thin cut was made on the surface of the obtained cellular molded article of a synthetic resin having a surface skin. Then the article was bent and broke, and the broken surface state was observed. The proportion of the broken expanded beads area to the whole area was indicated as percentage and ranked by the evaluation standard shown below.

### Evaluation standard

A: Melt bonding ratio of the expanded beads is not less than 60 %
B: Melt bonding ratio of the expanded beads is 40 to 59 %
C: Melt bonding ratio of the expanded beads is 20 to 39 %
D: Melt bonding ratio of the expanded beads is not more than 19 %

### (b) Adhesiveness between the cellular molded article of a synthetic resin and the thermoplastic resin skin material

The thermoplastic resin skin material and the cellular molded article of a synthetic resin bonded together in the obtained cellular molded article of a synthetic resin having a surface skin were peeled off, and the interfaced state was observed, and ranked by the evaluation standard shown below.

### Evaluation standard

A: Only a material break in the layer of the cellular molded article of synthetic resin is observed.
B: Both a material break in the cellular molded article of a synthetic resin layer and a peeling off at the interface of the cellular molded article of a synthetic resin layer and the thermoplastic resin skin material are observed.
C: Peeling off at the interface of the cellular molded article of a synthetic resin layer and the thermoplastic resin skin material is observed.
D: The cellular molded article of a synthetic resin layer and the thermoplastic resin skin material are not adhered to each other.

**Table 1**

| | Physical properties of the cellular molded article of a synthetic resin having a surface skin | |
|---|---|---|
| | Melt bonding ratio of the expanded beads | Adhesiveness between the cellular molded article of a synthetic resin and the thermoplastic resin skin material |
| Example 1 | A | A |
| Example 2 | A | A |
| Example 3 | A | A |
| Example 4 | A | A |
| Comparative Example 1 | B to D | C to D |
| Comparative Example 2 | B to D | C to D |
| Comparative Example 3 | B to D | C to D |
| Comparative Example 4 | B to D | C to D |

### EXAMPLE 5

Expanded beads used in this example consisted of EPERAN PP (made by KANBGAFUCHI CHEMICAL INDUSTRY Co. Ltd., tradename, expansion ratio was 15 times, imparted with 2 kg/cm² of inner pressure by air pressure in the pressure vessel in advance). By cellular molding a cellular molded article of a synthetic resin with a prescribed shape was formed in advance. The thermoplastic resin skin material used in this example was a polyolefinic thermoplastic resin sheet (TPO sheet). An adhesive was applied to one surface of this sheet in advance.

One mold part whose surface was formed in advance to a fine unevenness with a surface roughness having a waveshape in the range of 20 to 30 µm of amplitude and 150 to 200 µm of wavelength measured by a touching needle type surface roughness measuring instrument (made by TOKYO SEIMITSU Co., tradename SAFUKOMU 570A, touching needle tip with 5 µmR) by a chemical etching treatment, was made to be the upper mold part and the other mold part was made to be the lower mold part. The said cellular molded article of a synthetic resin was set on the other mold part. After heating and softening the thermoplastic resin skin material, it was set on the cellular molded article of a synthetic resin to make the adhesive-applied surface contact with the cellular molded article of a synthetic resin.

Next, while heating the said one mold part, the mold parts were clamped and pressurized by 2 kg/cm² of pressurizing force, and the cellular molded article of synthetic resin was obtained.

### COMPARATIVE EXAMPLE 5

The conditions of Comparative Example 5 were the same as those of Example 5 except that the surface of the said one mold part was smoothed without forming a fine unevenness, and the cellular molded article of a synthetic resin having a surface skin was obtained.

The surface appearance of the cellular molded article of a synthetic resin having a surface skin obtained by Example 5 and Comparative Example 5 were observed, and ranked by the following evaluation standard. The results were shown in Table 2.

### Evaluation Standard

○ : The beads pattern did not appear on the surface of the thermoplastic resin skin material.
×: The beads pattern appeared on the surface of the thermoplastic resin skin material.

**Table 2**

| | The surface appearance of the cellular molded article of a synthetic resin having a surface skin |
|---|---|
| Example 5 | ○ |
| Comparative Example 5 | × |

### EXAMPLE 6

EPERAN PP (made by RANEGAFUCHI CHEMICAL INDUSTRY Co. Ltd., tradename, expansion ratio was 15 times, imparted with 2 kg/cm² of inner pressure by air pressure in the pressure vessel in advance) was used as expanded beads, and by cellular molding a cellular molded article of a synthetic resin with a prescribed shape was formed in advance. A polyolefinic thermoplastic resin sheet (TPO sheet) was used as the thermoplastic resin skin material, and an adhesive was applied to the one surface of the sheet in advance.

The one mold part whose surface was formed in advance to a fine unevenness of the same roughness as mentioned above by a chemical etching treatment was set to be the upper mold part and the other mold part to be the lower mold part. The other conditions were the same as those of Example 5, and the cellular molded article of a synthetic resin having a surface skin was obtained.

### COMPARATIVE EXAMPLE 6

The conditions of Comparative Example 6 were the same as those of Example 6 except using one mold part whose surface was nearly smoothed. Namely, the surface roughness of this mold part had a waveshape with an amplitude of 0, 1 to 0,3 µm and a wavelength of 2 to 10 µm. This means that the waveshape difference between the surface roughness of this one mold part and the surface roughness of the said thermoplastic resin skin material was an amplitude of 0,4 µm and a wavelength of 28 µm. The cellular molded article of a synthetic resin having a surface skin was obtained.

### COMPARATIVE EXAMPLE 7

The conditions of Comparative Example 7 were the same as those of Example 6 except using the same thermoplastic resin skin material whose surface was nearly smoothed as used in Comparative Example 6, and the cellular molded article of a synthetic resin having a surface skin was obtained.

The surface appearances of the cellular molded articles of a synthetic resin having a surface skin obtained in Example 6 as well as Comparative Examples 6 and 7 were observed, and ranked by the said evaluation standard. The results were shown in Table 3.

**Table 3**

| | The surface appearance of the cellular molded article of a synthetic resin having a surface skin |
|---|---|
| Example 6 | ○ |
| Comparative Example 6 | × |
| Comparative Example 7 | × |

The method for producing a cellular molded article of a synthetic resin having a surface skin with a mold pattern according to this invention is suitable for the use as a method for producing automobile interior material or the like and mold pattern thereof, especially suitable for producing of automobile interior material or the like with a good production efficiency. The cellular molded article of a synthetic resin is obtained by cellular molding of expanded beads in which poor melt bonding does not occur. A thermoplastic resin skin material is united with said cellular molded article of a synthetic resin which has an excellent appearance without leaving a beads pattern on its surface.

## Claims

1. A method for producing a cellular molded article of a synthetic resin having a surface skin (1), which comprises using a mold of two parts (5, 6) defining together a molding chamber (7), inserting a skin material (3) into one part (5) of the mold, clamping the parts (5, 6) of the mold together, charging expanded beads (8) into said molding chamber (7) and then further expanding and melt bonding together said expanded beads (8) by heating with steam, along with melt bonding and uniting said expanded beads (8) with the skin material (1),
**characterized in that** there is used a skin material (3) which consists of a thermoplastic resin, and that during said heating step there is printed a fine unevenness (9, 9d, 9e) with an amplitude of 5 to 150 µm and a wavelength of the surface roughness waveshape of 30 to 600 µm, as measured by a surface roughness measuring instrument, onto a prescribed range of the surface of the thermoplastic resin skin material (3), in which prescribed range the thermoplastic resin skin material (3) is pressed harder to the surface of said one part (5) of the mold by the pressurizing force of the expanding beads (8) than in the remaining range of said surface, and onto the remaining range of said surface, the surface roughness in both said ranges being nearly uniform, wherein said printing of the fine unevenness (9, 9d, 9e) onto said ranges is effected by a fine unevenness (9, 9d, 9e) formed in advance on the surface (5a) of said one part (5) of the mold.

2. Method according to claim 1, wherein there is used said one part (5) of the mold with an unevenness printing material attached to the surface (5a) thereof in advance.

3. Method according to claim 1 or 2, wherein the cellular molded article and the thermoplastic resin skin material (3) are united by the additional use of an adhesive.

4. Method according to any of claims 1 to 3, wherein there is used said one mold part (5) having on its surface. (5a) an unevenness printing material which, in addiction to the fine unevenness (9, 9d, 9e), is provided with an unevenness (12) of a product design pattern, and wherein when printing said fine unevenness (9, 9d, 9e) onto the surface of the thermoplastic resin skin material (3) the unevenness (12) of the product design pattern is also printed thereon.

5. Method according to any of claims 1 to 4, wherein there is used said one mold part (5) having a fine unevenness (9, 9d, 9e) with an amplitude of not more than 50 µm and a wavelength of the surface roughness waveshape of not more than 200 µm.

6. A mold for producing a cellular molded article of a synthetic resin having a surface skin by a method as defined in any of claims 1 to 5, comprising two parts (5,6) defining together a molding chamber, **characterized in that** the surface (5a) of one of said parts (5) of the mold is provided with a fine unevenness (9, 9d, 9e) having an amplitude of 5 to 150 µm and a wavelength of the surface roughness waveshape of 30 to 600 µm, as measured by a surface roughness measuring instrument.

7. Mold according to claim 6, wherein the surface (5a) of said one mold part (5) is provided with a fine unevenness (9, 9d, 9e) having an amplitude of not more than 50 µm and a wavelength of the surface roughness waveshape of not more than 200 µm.

8. Mold according to any of claims 6 or 7, wherein the surface (5a) of said one mold part (5) is provided, in addition to the fine unevenness (9, 9d, 9e), with an unevenness (12) for a product design pattern.

## Patentansprüche

1. Verfahren zum Herstellen eines zelligen Formkörpers aus einem synthetischen Harz mit einer Oberflächenhaut (1), wobei eine Form aus zwei Teilen (5, 6) eingesetzt wird, die zusammen eine Formkammer (7) bilden, ein Hautmaterial (3) in einen Teil (5) der Form eingesetzt wird, die Teile (5, 6) zusammengeklammert werden, in die Formkammer (7) expandierte Perlen (8) eingefüllt werden und dann die expandierten Perlen (8) durch Erhitzen mit Wasserdampf weiterexpandiert und in der Schmelze miteinander verbunden werden, zusammen mit einem Verbinden in der Schmelze und Vereinigen der expandierten Perlen (8) mit dem Hautmaterial (1),
**dadurch gekennzeichnet, daß** ein Hautmaterial (3) verwendet wird, das aus einem Thermosplastharz besteht, und daß während der genannten Erhitzungsstufe eine feine Unebenheit (9, 9d, 9e) mit einer Amplitude von 5 bis 150 µm und einer Wellenlänge der Wellenform der Oberflächenrauheit von 30 bis 600 µm, gemessen mit einem Oberflächenrauheit-Meßinstrument, auf einen vorgegebenen Bereich der Oberfläche des Thermoplastharz-Hautmaterials (3) aufgedruckt wird, wobei in dem vorgegebenen Bereich das Thermoplastharz-Hautmaterial (3) durch die Druckkraft der expandierenden Perlen (8) stärker auf die Oberfläche des genannten einen Teils (5) der Form gedrückt wird als im restlichen Bereich der genannten Oberfläche und auf den restlichen Bereich der genannten Oberfläche gedruckt wird, wobei die Oberflächenrauheit in den beiden genannten Bereichen nahezu gleichförmig ist sowie das genannte Drucken der feinen Unebenheit (9, 9d, 9e) auf die genannten Bereiche durch eine feine Unebenheit (9, 9d, 9e) bewirkt wird, die vorher auf der Oberfläche (5a) des genannten einen Teils (5) der Form ausgebildet worden ist.

2. Verfahren nach Anspruch 1, worin der genannte eine Teil (5) der Form mit einem Unebenheit-Druckmaterial benutzt wird, das vorher an seiner Oberfläche (5a) angebracht worden ist.

3. Verfahren nach Anspruch 1 oder 2, worin der zellige Formkörper und das Thermoplastharz-Hautmaterial (3) durch die zusätzliche Verwendung eines Klebstoffs miteinander verbunden werden.

4. Verfahren nach einem der Ansprüche 1 bis 3, worin der genannte eine Formteil (5), welcher an seiner Oberfläche (5a) ein Unebenheit-Druckmaterial aufweist, das zusätzlich zu der feinen Unebenheit (9, 9d, 9e) mit einer Unebenheit (12) eines Produktdesignmusters versehen ist, wobei dann, wenn die feine Unebenheit (9, 9d, 9e) auf die Oberfläche des Thermoplastharz-Hautmaterials (3) aufgedruckt wird, die Unebenheit (12) des Produktdesignmusters auch darauf aufgedruckt wird.

5. Verfahren nach einem der Ansprüche 1 bis 4, worin der genannte eine Formteil (5) mit einer feinen Unebenheit (9, 9d, 9e) mit einer Amplitude von höchstens 50 µm und einer Wellenlänge der Wellenform der Oberflächenrauheit von höchstens 200 µm benutzt wird.

6. Form zum Herstellen eines zelligen Formkörpers aus einem synthetischen Harz mit einer Oberflächenhaut nach einem Verfahren, wie es in einem der Ansprüche 1 bis 5 definiert ist, wobei die Form zwei Teile (5, 6) aufweist, die zusammen eine Formkammer bilden, **dadurch gekennzeichnet, daß** die Oberfläche (5a) des genannten einen Teils (5) der Form mit einer feinen Unebenheit (9, 9d, 9e) mit einer Amplitude von 5 bis 150 µm und einer Wellenlänge der Wellenform der Oberflächenrauheit von 30 bis 600 µm, gemessen mit einem Oberflächenrauheit-Meßinstrument, versehen ist.

7. Form nach Anspruch 6, worin die Oberfläche (5a) des genannten einen Formteils (5) mit einer feinen Unebenheit (9, 9d, 9e) mit einer Amplitude von höchstens 50 µm und einer Wellenlänge der Wellenform der Oberflächenrauheit von höchstens 200 µm versehen ist.

8. Form nach Anspruch 6 oder 7, worin die Oberfläche (5a) des genannten einen Teils (5) zusätzlich zu der feinen Unebenheit (9, 9d, 9e) mit einer Unebenheit (12) für ein Produktdesignmuster versehen ist.

## Revendications

1. Procédé de production d'un article moulé alvéolaire d'une résine synthétique comportant une peau de surface (1), qui comprend l'utilisation d'un moule en deux parties (5, 6) définissant ensemble une chambre de moulage (7), l'insertion d'un matériau de peau (3) dans une première partie (5) du moule, le serrage des parties (5, 6) du moule ensemble, le chargement de perles expansées (8) à l'intérieur de ladite chambre de moulage (7) et ensuite 'une expansion supplémentaire et un collage ensemble par fusion desdites perles expansées (8) par un chauffage avec de la vapeur, en même temps qu'un collage par fusion et qu'une union desdites perles expansées (8) avec le matériau de peau (1),
**caractérisé en ce qu'**il est utilisé un matériau de peau (3) qui est constitué d'une résine thermoplastique, et que, lors de ladite étape de chauffage, il est imprimé une fine rugosité (9, 9d, 9e) avec une amplitude de 5 à 150 µm et une longueur d'onde de la forme d'onde d'inégalités de surface de 30 à 600 µm, mesurées par un instrument de mesure d'inégalités de surface, sur une zone prescrite de la surface du matériau de peau en résine thermoplastique (3) , dans laquelle zone prescrite le matériau de peau en résine thermoplastique (3) est comprimé plus fort sur la surface de ladite une première partie (5) du moule par la force de compression de l'expansion des perles (8) que dans la zone restante de ladite surface, et sur la zone restante de ladite surface, les inégalités de surface dans les deux zones étant pratiquement uniformes, où ladite empreinte de la fine rugosité (9, 9d, 9e) sur lesdites zones est réalisée par une fine rugosité (9, 9d, 9e) formée à l'avance sur la surface (5a) de ladite une première partie (5) du moule.

2. Procédé selon la revendication 1, dans lequel il est utilisé ladite première partie (5) du moule avec un matériau d'empreinte de rugosité fixé à la surface (5a) de celle-ci à l'avance.

3. Procédé selon la revendication 1 ou 2, dans lequel l'article moulé alvéolaire et le matériau de peau en résine thermoplastique (3) sont unis par l'utilisation supplémentaire d'un adhésif.

4. Procédé selon l'une quelconque des revendications 1 à 3, dans lequel il est utilisé ladite une première partie de moule (5) ayant sur sa surface (5a) un matériau d'empreinte de rugosité qui, en plus de la fine rugosité (9, 9d, 9e), reçoit une rugosité (12) d'un motif de conception de produit, et dans lequel lors de l'empreinte de ladite fine rugosité (9, 9d, 9e) sur la surface du matériau de peau en résine thermoplastique (3), la rugosité (12) du motif de conception de produit est également imprimée sur celle-ci.

5. Procédé selon l'une quelconque des revendications 1 à 4, dans lequel il est utilisé ladite une première partie de moule (5) comportant une fine rugosité (9, 9d, 9e) présentant une amplitude ne dépassant pas 50 µm et une longueur d'onde de la forme d'onde d'irrégularités de surface ne dépassant pas 200 µm.

6. Procédé de production d'un article moulé alvéolaire d'une résine synthétique présentant une peau de surface par un procédé tel que 'défini selon l'une quelconque des revendications 1 à 5, comprenant deux parties (5, 6) définissant ensemble une chambre de moulage, **caractérisé en ce que** la surface (5a) de l'une desdites parties (5) du moule est munie d'une fine rugosité (9, 9d, 9e) présentant une amplitude de 5 à 150 µm et une longueur d'onde de la forme d'onde d'irrégularités de surface de 30 à 600 µm, comme mesurée par un instrument de mesure d'irrégularités de surface.

7. Moule selon la revendication 6, dans lequel la surface (5a) de ladite une première partie de moule (5) est munie d'une fine rugosité (9, 9d, 9e) présentant une amplitude ne dépassant pas 50 µm et une longueur d'onde de la forme d'onde d'irrégularités de surface ne dépassant pas 200 µm.

8. Moule selon l'une quelconque des revendications 6 ou 7, dans lequel la surface (5a) de ladite une première partie de moule (5) reçoit, en plus de la fine rugosité (9, 9d, 9e), une rugosité (12) pour un motif de conception de produit.
